(19) Europäisches Patentamt
European Patent Office
Office européen des brevets

(11) Veröffentlichungsnummer : **0 048 355**
**B1**

(12) # EUROPÄISCHE PATENTSCHRIFT

(45) Veröffentlichungstag der Patentschrift : **25.07.84**

(21) Anmeldenummer : **81106753.7**

(22) Anmeldetag : **29.08.81**

(51) Int. Cl.³ : **C 09 B 62/09**, C 09 B 62/513, C 09 B 62/533, D 06 P 3/66, D 06 P 3/10

(54) **Wasserlösliche Disazoverbindungen, Verfahren zu deren Herstellung und ihre Verwendung als Farbstoffe.**

(30) Priorität : **06.09.80 DE 3033611**

(43) Veröffentlichungstag der Anmeldung : **31.03.82 Patentblatt 82/13**

(45) Bekanntmachung des Hinweises auf die Patenterteilung : **25.07.84 Patentblatt 84/30**

(84) Benannte Vertragsstaaten : **BE CH DE FR GB IT LI**

(56) Entgegenhaltungen :
**EP-A- 0 031 099**
**DE-A- 2 740 152**
**JP-A-53 117 024**
**RESEARCH DISCLOSURE, Dezember 1976, Industrial Opportunities Ltd. POGIEF; abstract 15209, Seite 6; Vants Hants GB "Dizazo reactive dyestuffs"**

(73) Patentinhaber : **HOECHST AKTIENGESELLSCHAFT**
**Postfach 80 03 20**
**D-6230 Frankfurt am Main 80 (DE)**

(72) Erfinder : **Meininger, Fritz, Dr.**
**Loreleistrasse 7**
**D-6230 Frankfurt am Main 80 (DE)**
Erfinder : **Hoyer, Ernst, Dr.**
**Eptingweg 3**
**D-6230 Frankfurt am Main 80 (DE)**
Erfinder : **Otten, Joachim, Dr.**
**verstorben (DE)**
Erfinder : **Fass, Rudolf**
**Memelstrasse 28**
**D-6233 Kelkheim (Taunus) (DE)**

**EP 0 048 355 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Deutsche Offenlegungsschrift Nr. 27 40 152 beschreibt Disazofarbstoffe, deren bivalente Kupplungskomponente die 1-Amino-8-naphtol-3,6-disulfonsäure ist und die in den Diazokomponenten einen Chlortriazinylrest als faserreaktive Gruppe besitzen (diese Disazofarbstoff sind darüber hinaus im Research Disclosure, Industrial Opportunities Ltd., Dezember 1976, Seite 6, referiert). So ist aus Beispiel 1 ein Disazofarbstoff bekannt, der im Färbeverfahren nach der Ausziehmethode bei 40 °C auf nichtmercerisierter Baumwolle einen wenig befriedigenden Fixiergrad aufweist.

Mit der vorliegenden Erfindung wurden nunmehr neue wasserlösliche Disazoverbindungen sehr ähnlicher Struktur gefunden, die in überraschender Weise einen wesentlich höheren Fixiergrad besitzen. Diese erfindungsgemäßen Disazoverbindungen entsprechen, in Form der freien Säure geschrieben, der allgemeinen Formel (1)

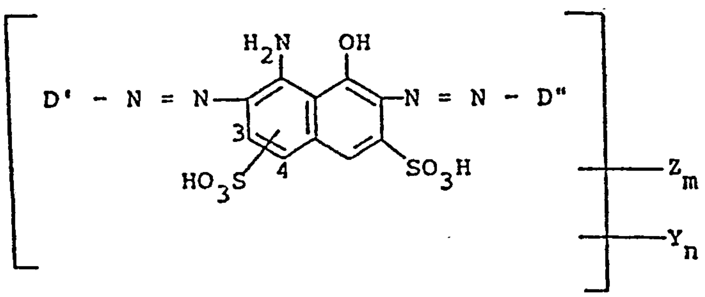

(1)

Diese neuen Verbindungen können in Form der freien Säure und in Form ihrer Salze vorliegen. Bevorzugt sind sie in Form der Salze, insbesondere der Alkali- und Erdalkalimetallsalze, insbesondere bevorzugt als Natrium-, Kalium- und auch Calciumsalze. Sie finden bevorzugt in Form der Alkalimetallsalze Verwendung zum Färben von vorzugsweise Fasermaterialien.

Die Formelreste der obigen Formel (1) haben die folgende Bedeutung :

D′ ist der Phenylrest oder der Naphthylrest, die durch eine Gruppe des nachstehend definierten Formelrestes Y oder Formelrestes Z substituiert sind und zusätzlich durch einen oder zwei Substituenten aus der Gruppe Sulfo, Chlor, Brom, niederes Alkyl, wie Äthyl und insbesondere Methyl, und niederes Alkoxy, wie Äthoxy und insbesondere Methoxy substituiert sein können ;

D″ ist der Phenylrest oder der Naphthylrest, die durch eine Gruppe des nachstehend definierten Formelrestes Y oder Formelrestes Z substituiert sind und zusätzlich durch einen oder zwei Substituenten aus der Gruppe Sulfo, Chlor, Brom, niederes Alkyl, wie Äthyl und insbesondere Methyl, und niederes Alkoxy, wie Äthoxy und insbesondere Methoxy, substituiert sein können ;

D′ und D″ können zueinander gleiche oder voneinander verschiedene Bedeutungen besitzen ;

die eine Sulfogruppe im Disulfo-1-amino-8-hydroxy-naphtylen-Rest steht in 3- oder 4-Stellung dieses Naphthalinrestes ;

Z ist eine Gruppe der Formel (2a), (2b), (2c), (2d), (2e) oder (2f)

$$-SO_2-CH_2-CH_2-X \qquad (2a)$$

$$-\underset{R}{\underset{|}{N}}-SO_2-CH_2-CH_2-X. \qquad (2b)$$

$$-CH_2-SO_2-CH_2-CH_2-X \qquad (2c)$$

$$-SO_2-CH=CH_2 \qquad (2d)$$

$$-\underset{R}{\underset{|}{N}}-SO_2-CH=CH_2 \qquad (2e)$$

$$-CH_2-SO_2-CH=CH_2 \qquad (2f)$$

in welchen

R eine Alkylgruppe von 1 bis 4 C-Atomen, vorzugsweise die Methylgruppe, darstellt und

X ein Chloratom oder die Acetyloxygruppe oder die Thiosulfatogruppe der Formel $-S-SO_3H$ (in Form der freien Säure geschrieben) oder die Phosphatogruppe der Formel $-O-PO_3H_2$ (in Form der freien Säure geschrieben) oder vorzugsweise die Sulfatogruppe der Formel $-OSO_3H$ (in Form der freien Säure geschrieben) bedeutet ;

Y ist ein Rest der Formel (3)

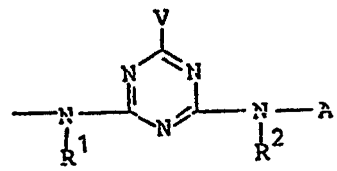
(3)

in welcher bedeuten :

$R^1$ ist ein Wasserstoffatom oder eine Alkylgruppe von 1 bis 4 C-Atomen ;

$R^2$ ist ein Wasserstoffatom oder eine Alkylgruppe von 1 bis 4 C-Atomen, wobei

$R^1$ und $R^2$ zueinander gleiche oder voneinander verschiedene Bedeutungen besitzen können ;

V ist das Chlor- oder Bromatom ;

A ist ein Wasserstoffatom oder eine Alkylgruppe von 1 bis 6 C-Atomen, die substituiert sein kann, beispielsweise durch einen oder zwei Substituenten aus der Gruppe Methoxy, Äthoxy, Hydroxy, Acetyloxy, Phosphato, Sulfato, Sulfo, Carboxy, Phenyl und Sulfophenyl, oder ist der Phenylrest, der durch Substituenten aus der Gruppe Methyl, Äthyl, Methoxy, Äthoxy, Chlor, Brom, Carboxy, Sulfo, Carbamoyl und Sulfamoyl substituiert sein kann, oder ist ein Rest der Formel (4)

$$-B-Z'' \qquad (4)$$

in welcher bedeuten :

B ist der Phenylen- oder Naphthylenrest, die durch ein oder zwei Substituenten substituiert sein können, die aus der Menge aus einer Sulfogruppe, einem Chloratom, einem oder zwei Methyl- oder Äthylgruppen und einer oder zwei Methoxy- oder Äthoxygruppen ausgewählt sind, und

Z'' besitzt die für Z vorstehend genannte Bedeutung ;

m ist die Zahl Null oder 1 und

n ist die Zahl 1 oder 2, wobei

die Summe von (m + n) gleich 2 ist und

die Verbindung der Formel (1) mindestens zwei der im Molekül möglichen Reste entsprechend den oben definierten Formeln (2a) bis (2f) und der nachstehenden Formel (5)

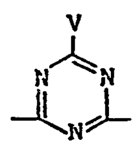
(5)

mit V der obengenannten Bedeutung zwingend enthält.

Die Angabe « niedere » bedeutet hier wie im folgenden, daß in dem so bezeichneten Rest (bzw. Verbindung) der aliphatische Rest bevorzugt ein solcher von 1 bis 4 C-Atomen ist.

Die vorliegende Erfindung betrifft weiterhin ein Verfahren zur Herstellung der neuen Disazoverbindungen der allgemeinen Fromel (1), das dadurch gekennzeichnet ist, daß man in äquimolaren Mengen 1-Amino-8-naphthol-3,6-disulfonsäure oder 1-Amino-8-naphthol-4,6-disulfonsäure im mittelstark bis stark sauren Bereich, vorzugsweise bei einem pH-Wert zwischen 0,5 und 4,5 und bei einer Temperatur zwischen 0 und 25 °C, mit einer Diazoniumverbindung eines Amins der allgemeinen Formel (6)

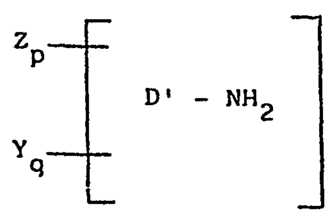
(6)

in welcher D', Z und Y die obengenannten Bedeutungen haben und p und q jedes für die Zahl Null oder 1 steht, und nachfolgend im schwach sauren bis schwach alkalischen Bereich, vorzugsweise bei einem pH zwischen 4,5 und 8,0 und bei einer Temperatur zwischen 0 und 30 °C, mit einer Diazoniumverbindung eines Amins der allgemeinen Formel (7)

$$\left[ D'' - NH_2 \right] \begin{matrix} -Z_r \\ -Y_s \end{matrix} \qquad (7)$$

in welcher D", Z und Y die obengenannte Bedeutung besitzen und r und s jedes für die Zahl Null oder 1 steht, umsetzt und hierbei die erste Diazoniumverbindung in o-Stellung zur Aminogruppe des Aminophthols zur Monoazoverbindung kuppelt und die zweite Diazoniumverbindung in o-Stellung zur Hydroxygruppe der gebildeten Monoazoverbindung einführt, wobei man die Amine der allgemeinen Formeln (6) und (7) so auswählt, daß die Summe von (p + q) gleich 1, die Summe von (r + s) gleich 1, die Summe von (p + r) gleich Null oder 1 und die Summe von (q + s) gleich 1 oder 2 ist. — In den Diazokomponenten der allgemeinen Formeln (6) und (7) können die Formelreste D', D", Z und Y zueinander gleiche oder von einander verschiedene Bedeutungen besitzen und in ein und derselben Aminoverbindung die Formelreste $R^1$ und $R^2$ jeweils gleiche oder verschiedene Bedeutungen zueinander haben. Weiterhin kann der eventuell in Y vorhandene Rest Z von dem eventuell vorhandenen, an D' oder D" direkt gebundenen Rest Z verschieden sein. Die zur Herstellung der erfindungsgemäßen Disazoverbindungen in die Reaktion eingesetzten beiden Amine können somit entweder die gleiche oder eine voneinander verschiedene Konstitution haben.

Aromatische Amine der allgemeinen Formel (6) und der allgemeinen Formel (7), in welchen q gleich Null bzw. s gleich Null ist, sind beispielsweise in den deutschen Patentschriften 1 278 041, 1 276 842, 1 150 163, 1 126 542, 1 153 029 und in den deutschen Offenlegungsschriften 21 54 943, 21 00 080, 20 34 591, 19 43 904 und in der deutschen Auslegeschrift 1 204 666 beschrieben. Aromatische Amine der allgemeinen Formel (6) und der allgemeinen Formel (7), in welchen p gleich Null bzw. r gleich Null ist, lassen sich beispielsweise analog der in der deutschen Patentschrift 485 185 beschriebenen Verfahrensweise durch Umsetzung einer entsprechenden Aminoverbindung mit Cyanurchlorid oder Cyanurbromid und anschließender zweiter Kondensationsreaktion mit einer Diaminobenzol- oder Diaminonaphthalin-Verbindung der Formel

$$R^1—NH—D'—NH_2$$

oder

$$R^1—NH—D''—NH_2$$

herstellen.

Die Diazotierung der Amine der allgemeinen Formeln (6) und (7) erfolgt in bekannter und üblicher, dem Fachmann geläufiger Weise, beispielsweise mittels salpetriger Säure (Alkalinitrit und eine starke Säure), Nitrosylschwefelsäure oder einem niederen Alkylnitrit.

Die Kupplungsreaktion des diazotierten Amins der allgemeinen Formel (6) mit der 1-Amino-8-naphthol-3,6- oder -4,6-disulfonsäure wird zuerst in saurem Medium, wie bei einem pH-Wert zwischen 0 und 3, analog bekannten Verfahrensweisen durchgeführt, so daß diese Diazoniumverbindung in die 2-Stellung des Naphthalinrestes kuppelt; anschließend wird die Kupplung mit der zweiten Diazokomponente in schwach saurem bis schwach alkalischem Medium, wie bei einem pH-Wert zwischen 3,5 und 8, durchgeführt, wobei die Kupplung in 7-Stellung des Naphthalinrestes der gebildeten Monoazoverbindung erfolgt. Solche Verfahrensweisen sind beispielsweise aus den deutschen Patentschriften 960 534 und 1 644 198 bekannt.

Aromatische Amine der allgemeinen Formel (6), in welcher q gleich Null ist, bzw. der allgemeinen Formel (7), in welcher s gleich Null ist, sind beispielsweise: Anilin-3β-sulfatoäthylsulfon, Anilin-4-β-sulfatoäthylsulfon, 2-Amino-toluol-4-β-sulfatoäthylsulfon, 2-Amino-anisol-4-β-sulfatoäthylsulfon, 2-Amino-anisol-5-β-sulfatoäthylsulfon, 2,5-Dimethoxy-anilin-4-β-sulfatoäthylsulfon, 2,4-Dimethoxyanilin-5-β-sulfatoäthylsulfon, 2-Methoxy-5-methyl-anilin-4-β-sulfatoäthylsulfon, 4-Amino-anisol-3-β-sulfatoäthylsulfon, 4-Amino-toluol-3-β-sulfatoäthylsulfon, 4-β-Sulfatoäthylsulfonyl-anilin-2-sulfonsäure, 5-β-Sulfatoäthylsulfonyl-anilin-2-sulfonsäure, 2-Amino-toluol-5-β-sulfatoäthylsulfon, 2-Chlor-anilin-4-β-sulfatoäthylsulfon, 2-Chloranilin-5-β-sulfatoäthylsulfon, 2-Brom-anilin-4-β-sulfatoäthylsulfon, 2,6-Dichlor-anilin-4-β-sulfatoäthylsulfon, 2,6-Dimethyl-anilin-3-β-sulfatoäthylsulfon, 2,6-Dimethylanilin-4-β-sulfatoäthylsulfon, 2-Naphthylamin-5-β-sulfatoäthylsulfon, 2-Naphthylamin-6-β-sulfatoäthylsulfon, 2-Naphthylamin-8-β-sulfatoäthylsulfon, 8-β-Sulfatoäthylsulfonyl-2-amino-naphthalin-6-sulfonsäure, 6-β-Sulfatoäthylsulfonyl-2-amino-naphthalin-1-sulfonsäure, N-Methyl-N-β-sulfatoäthylsulfonyl-p-phenylendiamin, N-Methyl-N-β-sulfatoäthylsulfonyl-m-phenylendiamin, (4-Aminobenzyl)-(β-sulfatoäthyl)-sulfon, (3-Aminobenzyl)-(β-sulfatoäthyl)-sulfon sowie deren entsprechende β-Chloräthyl-, β-Acetoxy-äthyl-, β-Phosphatoäthyl-, β-Thiosulfatoäthyl- und Vinylsulfonyl-Derivate.

Aromatische Amine der allgemeinen Formel (6), in welcher p gleich Null ist, bzw. der allgemeinen Formel (7), in welcher r gleich Null ist, sind beispielsweise Verbindungen entsprechend den allgemeinen Formeln (8a), (8b) und (8c)

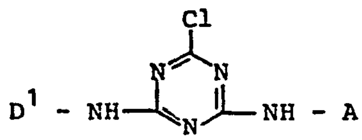

(8a)

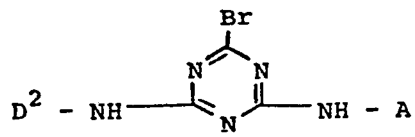

(8b)

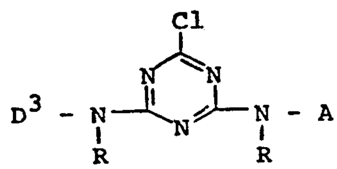

(8c)

worin $D^1$ bspw. den 3-Amino-4-sulfo-phenyl-, den 4-Amino-3-sulfo-phenyl-, den 4-Amino-2,5-disulfo-phenyl-, den 3-Amino-4,6-disulfo-phenyl-, den 4-Amino-phenyl-, den 3-Amino-2-methyl-5-sulfo-phenyl-, den 3-Amino-4-chlorphenyl-, den 4-Amino-3,5-disulfo-phenyl-, den 3-Amino-4-methyl-phenyl-, den 3-Amino-4-methoxy-phenyl-, den 6-Amino-4,8-disulfo-naphth-2-yl-, den 5-Amino-3,7-disulfo-naphth-1-yl- oder den 3-Amino-phenyl-Rest bedeutet, $D^2$ bspw. der 3-Amino-4-sulfo-phenyl- oder den 4-Amino-3-sulfo-phenyl-Rest und $D^3$ bspw. 3-Amino-4-sulfo-phenyl-, der 4-Amino-3-sulfophenyl- oder der 4-Amino-phenyl-Rest ist und das eine R ein Wasserstoffatom und das andere R eine Methylgruppe darstellt sowie A jeweils beispielsweise ein Wasserstoffatom, eine Methyl-, Äthyl-, n-Propyl-, i-Propyl-, eine β-Hydroxyäthyl-, β-Sulfatoäthyl-, β-Methoxyäthyl-, β-Sulfoäthyl-, Carboxymethyl-, β-Carboxyäthyl-, Benzyl-, β-Phenäthyl-, Phenyl-, 4-Sulfophenyl-, 3-Sulfophenyl-, 3-Carboxyphenyl-, 4-Carboxyphenyl-, 2,5-Disulfophenyl- oder einen 3-Hydroxy-4-carboxyphenyl-Rest bedeutet oder der Formelrest A jeweils einen Rest der allgemeinen Formel (4a)

$$—B—Z^1 \qquad (4a)$$

darstellt, in welcher B beispielsweise den 1,4-Phenylen-, 1,3-Phenylen-, 4-Methyl-1,3-phenylen-, 4-Methoxy-1,3-phenylen-, 3-Methoxy-1,4-phenylen-, 2,5-Dimethoxy-1,4-phenylen-, 4,6-Dimethoxy-1,3-phenylen-, 2-Methyl-5-methoxy-1,4-phenylen-, 3-Chlor-1,4-phenylen-, 6-Methoxy-1,3-phenylen-, 6-Methyl-1,3-phenylen-, 4-Sulfo-1,3-phenylen-, 4-Methyl-1,3-phenylen-, 4-Chlor-1,3-phenylen-, 3-Brom-1,4-phenylen- oder den 2,4-Dimethyl-1,3-phenylen-Rest mit jeweils der nachstehend definierten Gruppe $Z^1$ in 1-Stellung der Phenylenreste gebunden darstellt und $Z^1$ für die β-Chloräthylsulfonyl-, β-Acetoxy-äthylsulfonyl-, β-Thiosulfatoäthylsulfonyl-, β-Phosphatoäthylsulfonyl- oder die Vinylsulfonyl-Gruppe oder bevorzugt für die β-Sulfatoäthylsulfonyl-Gruppe steht, oder in welchen der Formelrest A jeweils einen der nachstehend formelmäßig angegebenen Reste

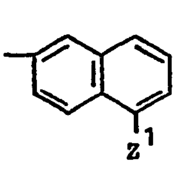 , 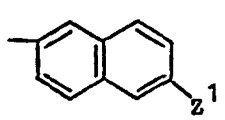 , 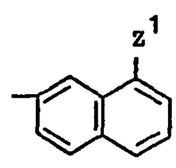 ,

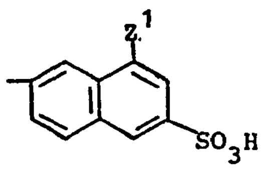 , 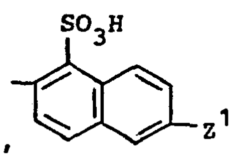 , 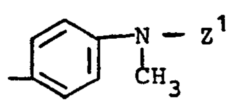 ,

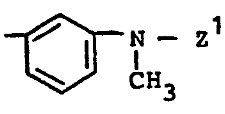 , 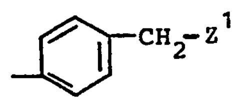 , 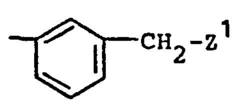

bedeutet, in welchen $Z^1$ eine der obengenannten Bedeutungen besitzt.

Die Abscheidung bzw. Isolierung der erfindungsgemäß hergestellten Verbindungen der allgemeinen Formel (1) erfolgt nach allgemein bekannten Methoden entweder durch Ausfällen aus dem Reaktionsmedium mittels Elektrolyten, wie beispielsweise Natriumchlorid oder Kaliumchlorid, oder aber durch Eindampfen der Reaktionslösung, beispielsweise durch Sprühtrocknung. In manchen Fällen kann es auch wünschenswert sein, die Farbstofflösung, gegebenenfalls nach Zusatz von Puffersubstanzen und gegebenenfalls nach eventuellem Konzentrieren, direkt als Flüssigpräparation der färberischen Verwendung zuzuführen.

Von den erfindungsgemäßen Verbindungen sind solche bevorzugt, die den allgemeinen Formeln (9), (10), (11), (12), (13) und (14) entsprechen :

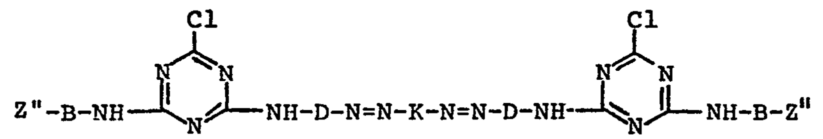

(9)

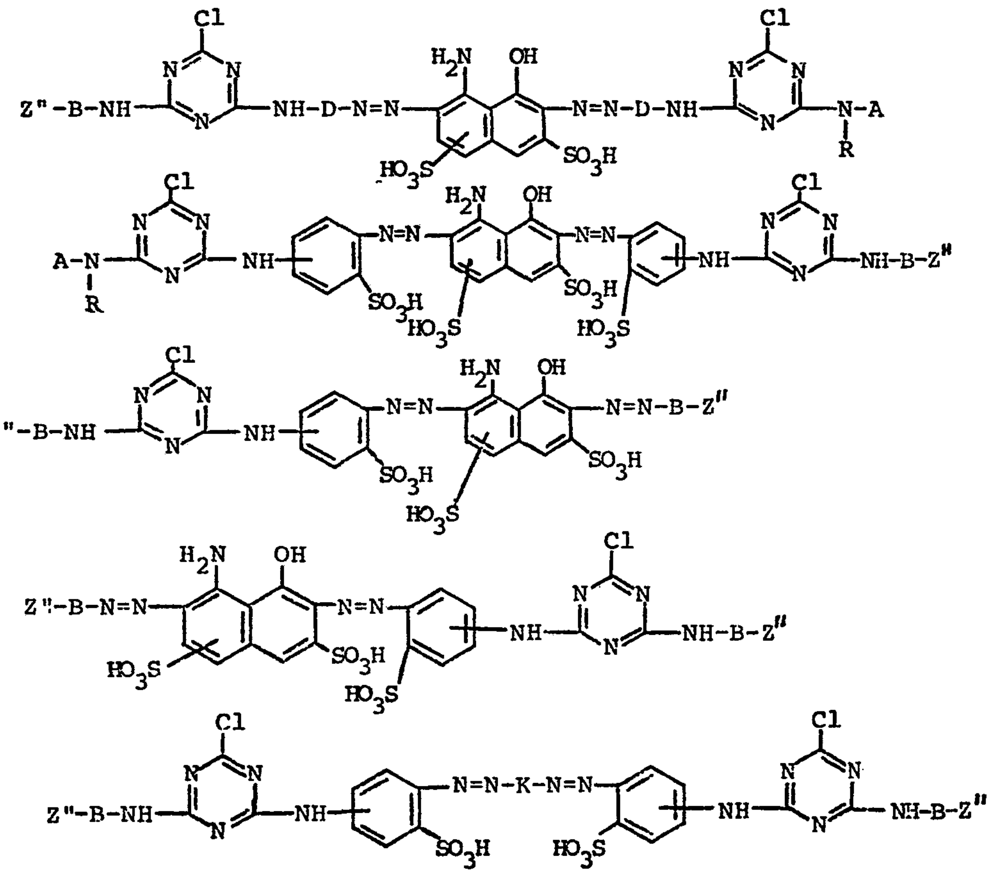

(10)

(11)

(12)

(13)

(14)

In diesen Formeln bedeuten :

Z″ hat die obengenannte Bedeutung, ist jedoch bevorzugt die β-Sulfatoäthylsulfonyl- oder Vinylsulfonylgruppe ;

B ist der Phenylrest, der durch eine Sulfogruppe oder durch eine Methylgruppe oder Methoxygruppe oder ein Chloratom oder zwei Methoxygruppen oder eine Methoxy- und eine Methylgruppe substituiert sein kann, wobei die beiden Formelreste B gleich oder verschieden voneinander sein können ;

D ist der Phenylenrest, der durch eine oder zwei Sulfogruppen oder eine Methoxygruppe, eine Methylgruppe oder ein Chloratom oder durch zwei Methoxygruppen oder durch eine Methoxy- und eine Methylgruppe substituiert sein kann, wobei die beiden Formelreste D gleich oder verschieden voneinander sein können ;

A ist eine Methyl- oder Äthylgruppe, eine β-Hydroxyäthyl-, β-Sulfoäthyl-, Carboxyäthyl-, β-Sulfatoäthyl- oder Sulfophenylgruppe ;

R ist ein Wasserstoffatom, eine Methyl- oder Äthylgruppe ;

K steht für den bivalenten Rest der als Kupplungskomponente dienenden, doppel-ankuppelbaren 1-Amino-8-naphthol-3,6- oder -4,6-disulfonsäure ;

die beiden freistehenden Aminobrücken in Formel (11) stehen in meta- oder para-Stellung zu den Azogruppen gebunden.

Die erfindungsgemäßen Disazoverbindungen der allgemeinen Formel (1) besitzen wertvolle Farbstoffeigenschaften, die gleichzeitig in Folge ihrer Chlor- oder Bromtriazinylen-Komponente und des Restes Z faserreaktives Eigenschaften aufweisen. Die neuen Verbindungen werden bevorzugt zum Färben (im allgemeinen Sinne) von hydroxy-, amino- oder carbonamidgruppenhaltigen Materialien, beispielsweise in Form von Flächengebilden, wie Papier und Leder, oder in der Masse, wie Polyamid und Polyurethan, insbesondere von solchen Materialien in Faserform, verwendet.

Die vorliegende Erfindung betrifft somit auch die Verwendung der Verbindungen der allgemeinen Formel (1) zum Färben (einschließlich Massefärbung und Druckfärbung) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialen in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte oder Polyvinylalkohole. Cellulosefasermaterialien sind vorzugsweise Baumwolle, aber auch andere Pflanzenfasern, wie Leinen, Hanf, Jute und Ramiefasern, regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Farbstoffe lassen sich auf den genannten Substraten nach den für Reaktivfarbstoffe bekannten Anwendungstechniken applizieren. So erhält man mit ihnen auf Cellulosefasern nach dem Ausziehverfahren aus langer Flotte zum Beispiel unter Verwendung der verschiedensten Alkalizusätze sehr gute Farbausbeuten.

Nach den Klotzverfahren werden auf Cellulosefasern ebenfalls ausgezeichnete Farbausbeuten erhalten, wobei durch Verweilen bei Raumtemperatur, durch Dämpfen oder mit Trockenhitze fixiert werden kann.

Nach den üblichen Druckverfahren für Cellulosefasern, einphasig in Anwesenheit von Natriumbicarbonat oder anderer säurebindender Mittel in der Druckpaste und anschließendem Dämpfen bei 101-103 °C oder zweiphasig mit neutraler oder schwach saurer Druckpaste gedruckt und dann entweder durch ein heißes elektrolythaltiges alkalisches Bad geführt oder aber mit einer alkalischen elektrolythaltigen Klotzflotte überklotzt und dann durch Verweilen, Dämpfen oder Trockenhitze entwickelt, erhält man ebenfalls farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffen erhaltenen Fixiergrade außergewöhnlich hoch.

Die Echtheiten der auf Cellulosefasern mit Hilfe der erfindungsgemäßen Farbstoffe erhaltenen Färbungen und Drucke sind beachtlich. Dies gilt sowohl für die wichtigsten Fabrikations- als auch für die wichtigsten Gebrauchsechtheiten. Besonders zu erwähnen sind die Lichtechtheit, die Naßechtheiten, wie Waschechtheiten, Walkechtheiten, Wasserechtheit, Seewasserechtheit, Überfärbeechtheit, Schweißechtheit, sowie Plissierechtheit, Bügelechtheit und Reibechtheit.

Die Färbungen auf Polyamidfasern werden üblicherweise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzol- und/oder einer Aminonaphthalinsulfonsäure und/oder auf Basis eines Umsetzungsproduktes von beispielsweise Stearylamin mit Äthylenoxyd. Die Färbungen können sowohl bei Siedetemperatur als auch bei 110-120 °C ausgeführt werden.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

### Beispiel 1

Eine neutrale Lösung von 28,1 Teilen Anilin-4-β-sulfatoäthylsulfon in 150 Teilen Wasser wird unter Rühren in eine Suspension gegossen, die durch Einrühren einer Lösung von 19,5 Teilen Cyanurchlorid in 100 Volumenteilen Aceton in ein Gemisch aus 200 Teilen Wasser und 200 Teilen Eis erhalten wird. Das Reaktionsgemisch wird bei 0 bis 5 °C und bei einem pH-Wert von 3 bis 4 eine Stunde lang gerührt, wobei zur Einhaltung des pH-Wertes portionsweise 8,4 Teile Natriumbicarbonat zugegeben werden. Anschließend wird zu der erhaltenen Suspension des primären Kondensationsproduktes eine neutrale Lösung von 26,8 Teilen 1,4-Diaminobenzol-2,5-disulfonsäure in 200 Teilen Wasser gegeben ; dieses Reaktionsgemisch wird bei 25 bis 28 °C und bei einem pH-Wert von 6,5 bis 7,2 etwa 18 Stunden lang gerührt, wobei der pH-Wert durch portionsweise Zugabe von Natriumbicarbonat in dem angegebenen Bereich gehalten wird. Das gebildete sekundäre Reaktionsprodukt bildet eine klare Lösung. — In diese Lösung werden 250

Teile Eis und anschließend 60 Volumenteile einer 31 %igen wäßrigen Salzsäure gegeben ; die anschließende Diazotierung erfolgt durch Zutropfen von 20 Volumenteilen einer wäßrigen 5n-Natriumnitritlösung bei einer Temperatur von 0 bis 5 °C. Die erhaltene Diazoniumsalzlösung wird sodann bei einem pH-Wert von 2,5 bis 3,0 und einer Temperatur von 0 bis 10 °C in eine Lösung von 31,9 Teilen 1-Amino-8-naphthol-3,6-disulfonsäure in 1 500 Teilen Wasser eingetropft, wobei der pH durch portionsweise Zugabe von 63 Teilen kristallisiertem Natriumacetat bei diesem Wert von 2,5 bis 3,0 gehalten wird. Nach beendeter Kupplung wird die gebildete Monoazoverbindung mittels Kaliumchlorid ausgefällt und abgesaugt.

Der feuchte Filterkuchen dieser Monoazoverbindung wird in 500 Teilen Wasser gelöst. Ein weiterer Ansatz des wie oben beschriebenen diazotierten sekundären Kondensationsproduktes aus Cyanurchlorid und Anilin-4-β-sulfatoäthylsulfon sowie 1,4-Diaminobenzol-2,5-disulfonsäure werden in diese wäßrige Lösung der Monoazoverbindung eingetropft, wobei die Temperatur bei 10 bis 18 °C und der pH-Wert bei 6,0 bis 6,5 gehalten werden. Die Kupplungsreaktion wird noch 4 Stunden unter Rühren weitergeführt. Die Lösung wird anschließend geklärt und die gebildete Disazoverbindung durch Zugabe von Natriumchlorid ausgesalzen, die sodann abgesaugt, bei 40 bis 50 °C getrocknet und gemahlen wird.

Es wird ein schwarzes, elektrolythaltiges (vorwiegend Natriumchlorid) Pulver erhalten, das das Alkalimetallsalz, vorwiegend Natriumsalz, der Verbindung der Formel

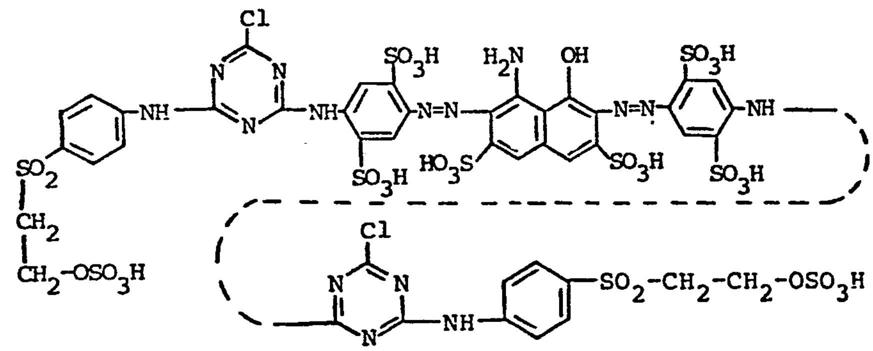

enthält. Diese zeigt sehr gute Farbstoffeigenschaften und färbt nach den für Reaktivfarbstoffe üblichen Färbe- und Druckmethoden und Fixierverfahren Cellulosefasermaterialien, wie Baumwolle, in grünstichig schwarzen Farbtönen ; diese Färbungen und Drucke zeigen sehr gute Gebrauchs- und Fabrikationsechtheiten, wie insbesondere eine sehr gute Wasch-, Schweiß, Reib-, Wasser-, Säure- und Alkaliechtheit. Bei Druckverfahren auf Cellulosefasern ist die Dampfbeständigkeit und das gute Verhalten beim Auswaschen neben dem hohen Fixiergrad und gleichem Ausfall der nach verschiedenen Verfahren fixierten Drucke besonders zu erwähnen.

Beispiele 2 bis 42

Verfährt man in einer der erfindungsgemäßen Verfahrensweisen zur Herstellung der erfindungsgemäßen Verbindungen entsprechend der allgemeinen Formel (1), so beispielsweise analog der im Beispiel 1 angegebenen Verfahrensweise, und setzt hierzu als Ausgangsverbindungen in entsprechender Weise 1,3- oder 1,4-Diaminobenzol-2-sulfonsäure, Cyanurchlorid und ein Anilin- oder Naphthylaminderivat mit einer β-Sulfatoäthylsulfonylgruppe, welche aus den nachfolgenden Tabellenbeispielen in Verbindung mit der allgemeinen Formel (A) ersichtlich sind, als kondensationskomponenten sowie 1-Amino-8-naphthol-3,6- oder -4,6-disulfonsäure als Kupplungskomponenten ein, so erhält man die in diesen Tabellenbeispielen angegebenen erfindungsgemäßen Disazoverbindungen, die sehr gute Farbstoffeigenschaften besitzen und ebenfalls auf natürlichen und synthetischen Polyamidfasermaterialien, insbesondere jedoch auf natürlichen und regenerierten Cellulosefasermaterialien, wie insbesondere Baumwolle, insbesondere nach den für faserreaktive Farbstoffe üblichen Färbe- und Druckmethoden und Fixierweisen, farbstarke Färbungen und Drucke mit sehr guten Echtheitseigenschaften und den in den Tabellenbeispielen angegeben Farbtönen liefern.

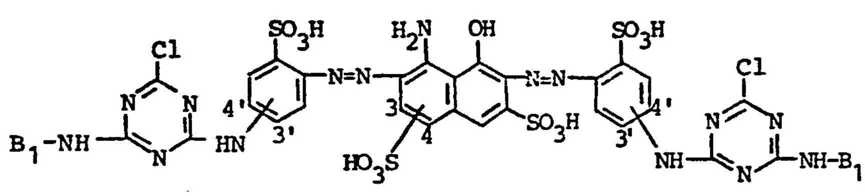

(A)

(Siehe Tabelle Seite 9 ff.)

| Bsp. | $B_1$ | Stell. der NH-Gruppe | Stell. der $SO_3H$-Gruppe | Nuance auf Baumwolle |
|---|---|---|---|---|
| 2 | 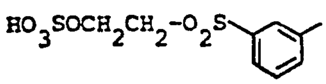 | 4' | 3 | grünst. Schwarz |
| 3 | dito | 3' | 3 | Blauschwarz |
| 4 | dito | 4' | 4 | Schwarz |
| 5 | dito | 3' | 4 | Marineblau |
| 6 | 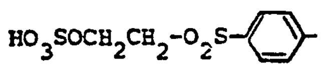 | 4' | 4 | Marineblau |
| 7 | dito | 3' | 4 | rotst. Marine |
| 8 | 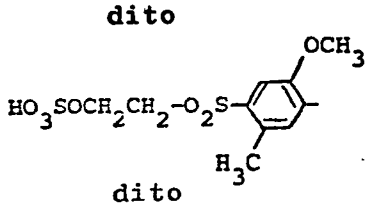 | 4' | 3 | Dunkelgrau |
| 9 | dito | 3' | 3 | Blauschwarz |
| 10 | dito | 4' | 4 | Dunkelblau |
| 11 | dito | 3' | 4 | rotst. Marine |
| 12 | 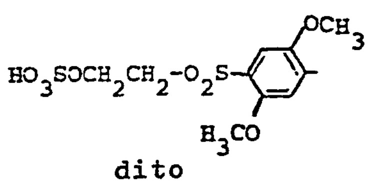 | 4' | 3 | Dunkelblau |
| 13 | dito | 3' | 3 | Dunkelblau |
| 14 | dito | 4' | 4 | Marineblau |
| 15 | dito | 3' | 4 | rotst. Marine |
| 16 | 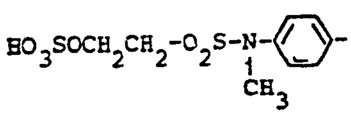 | 4' | 3 | Dunkelgrau |
| 17 | dito | 3' | 3 | Marineblau |
| 18 | 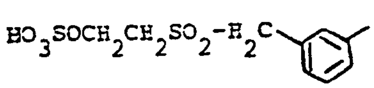 | 3' | 3 | Schwarz |
| 19 | dito | 4' | 3 | Schwarz |
| 20 | dito | 3' | 4 | Schwarz |
| 21 | 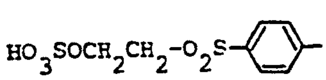 | 4' | 3 | grünst. Marine |

| Bsp. | $B_1$ | Stell. der NH-Gruppe | Stell. der $SO_3H$-Gruppe | Nuance auf Baumwolle |
|---|---|---|---|---|
| 22 | dito | 3' | 3 | rotst. Marine |
| 23 | 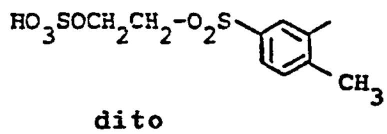 | 4' | 3 | grünst. Schwarz |
| 24 | dito | 3' | 3 | Blauschwarz |
| 25 | dito | 4' | 4 | grünst. Marine |
| 26 | dito | 3' | 4 | schwarz |
| 27 | 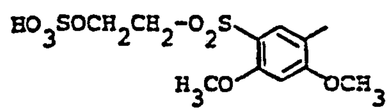 | 3' | 3 | grünst. Schwarz |
| 28 | dito | 4' | 3 | Blauschwarz |
| 29 | dito | 3' | 4 | Marineblau |
| 30 | dito | 4' | 4 | Marineblau |
| 31 | 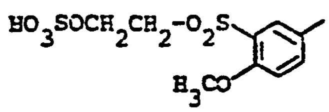 | 3' | 3 | Dunkelblau |
| 32 | dito | 4' | 3 | Dunkelblau |
| 33 | dito | 3' | 4 | Marineblau |
| 34 | dito | 4' | 4 | Schwarz |
| 35 | 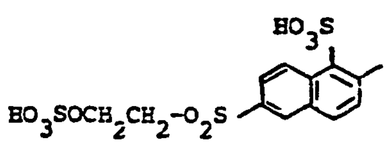 | 3' | 3 | Marineblau |
| 36 | dito | 4' | 3 | Schwarz |
| 37 | dito | 3' | 4 | Dunkelblau |
| 38 | dito | 4' | 4 | Schwarz |
| 39 | 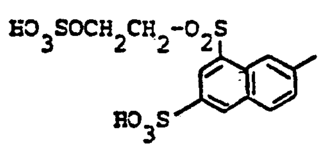 | 3' | 3 | Dunkelblau |
| 40 | dito | 4' | 3 | grünst. Schwarz |

| Bsp. | $B_1$ | Stell. der NH-Gruppe | Stell. der $SO_3H$-Gruppe | Nuance auf Baumwolle |
|---|---|---|---|---|
| 41 | dito | 3' | 4 | Marineblau |
| 42 | dito | 4' | 4 | rotst. Marine |

Beispiele 43 bis 229

Verfährt man in einer der erfindungsgemäßen Verfahrensweisen zur Herstellung der erfindungsgemäßen Verbindungen entsprechend der allgemeinen Formel (1), so beispielsweise analog der im Beispiel 1 angegebenen Verfahrensweise, und setzt hierzu als Ausgangsverbindungen in entsprechender Weise 1,3- oder 1,4-Diaminobenzol-Derivate oder 1,5- oder 2,6-Diamino-naphthalin-Derivate, Cyanurchlorid und ein Anilin- oder Naphthylaminderivat mit einer β-Sulfatoäthylsulfonylgruppe, welche aus den nachfolgenden Tabellenbeispielen in Verbindung mit der allgemeinen Formel (B) ersichtlich sind, als Kondensationskomponenten sowie 1-Amino-8-naphthol-3,6- oder -4,6-disulfonsäure als Kupplungskomponenten ein, so erhält man die in diesen Tabellenbeispielen angegebenen erfindungsgemäßen Disazoverbindungen, die sehr gute Farbstoffeigenschaften besitzen und ebenfalls auf natürlichen und synthetischen Polyamidfasermaterialien, insbesondere jedoch auf natürlichen und regenerierten Cellulosefasermaterialien, wie insbesondere Baumwolle, insbesondere nach den für faserreaktive Farbstoffe üblichen Färbe- und Druckmethoden und Fixierweisen, farbstarke Färbungen und Drucke mit sehr guten Echtheitseigenschaften und den in den Tabellenbeispielen angegebenen Farbtönen liefern.

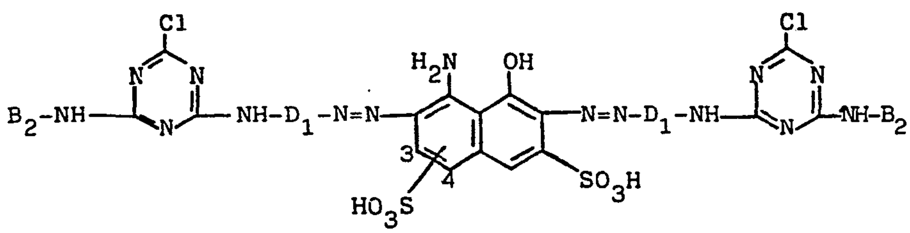

(B)

| Bsp. | $B_2$ | $D_1$ | Stellg. von $HO_3S$- | Farbton auf Baumwolle |
|---|---|---|---|---|
| 43 | 4"-(β-Sulfatoäthyl-sulfonyl)-phenyl | 4',6'-Disulfo-1',3'-phenylen | 3 | marineblau |
| 44 | dito | 5'-Sulfo-2'-methyl-1',3'-phenylen | 3 | marineblau |
| 45 | dito | 4'-Methyl-1',3'-phenylen | 3 | schwarz |
| 46 | dito | 4'-Methoxy-1',3'-phenylen | 3 | schwarz |
| 47 | dito | 4',8'-Disulfo-2',6'-naphthylen | 3 | marineblau |
| 48 | dito | 3',7'-Disulfo -1',5'-naphthylen | 3 | marineblau |
| 49 | dito | p-Phenylen | 3 | grünstichig schwarz |
| 50 | dito | m-Phenylen | 3 | schwarz |
| 51 | dito | 4',6'-Disulfo-1',3'-phenylen | 4 | marineblau |
| 52 | dito | 5'-Sulfo-2'-methyl-1',3'-phenylen | 4 | marineblau |

| Bsp. | $B_2$ | $D_1$ | Stellg. von $HO_3S$- | Farbton auf Baumwolle |
|---|---|---|---|---|
| 53 | dito | 4'-Methyl-1',3'-phenylen | 4 | schwarz |
| 54 | dito | 4'-Methoxy-1',3'-phenylen | 4 | schwarz |
| 55 | dito | 4',8'-Disulfo-2',6'-naphthylen | 4 | marineblau |
| 56 | dito | 3',7'-Disulfo-1',5'-naphthylen | 4 | marineblau |
| 57 | dito | p-Phenylen | 4 | grünstichig schwarz |
| 58 | dito | m-Phenylen | 4 | schwarz |
| 59 | dito | 2',5'-Disulfo-1',4'-phenylen | 4 | grünstichig schwarz |
| 60 | 3"-(ß-Sulfatoäthyl-sulfonyl)-phenyl | 4',6'-Disulfo-1',3'-phenylen | 3 | marineblau |
| 61 | dito | 5'-Sulfo-2'-methyl-1',3'-phenylen | 3 | marineblau |
| 62 | dito | 4'-Methyl-1',3'-phenylen | 3 | schwarz |
| 63 | dito | 4'-Methoxy-1',3'-phenylen | 3 | schwarz |
| 64 | dito | 4',8'-Disulfo-2',6'-naphthylen | 3 | marineblau |
| 65 | dito | 3',7'-Disulfo -1',5'-naphthylen | 3 | marineblau |
| 66 | 3"-(ß-Sulfatoäthyl-sulfonyl)-phenyl | p-Phenylen | 3 | grünstichig schwarz |
| 67 | dito | m-Phenylen | 3 | schwarz |
| 68 | dito | 4',6'-Disulfo-1',3'-phenylen | 4 | marineblau |
| 69 | dito | 5'-Sulfo-2'-methyl-1',3'-phenylen | 4 | marineblau |
| 70 | dito | 4'-Methyl-1',3'-phenylen | 4 | schwarz |
| 71 | dito | 4'-Methoxy-1',3'-phenylen | 4 | schwarz |
| 72 | dito | 4',8'-Disulfo-2',6'-naphthylen | 4 | marineblau |
| 73 | dito | 3',7'-Disulfo-1',5'-naphthylen | 4 | marineblau |
| 74 | dito | p-Phenylen | 4 | grünstichig schwarz |
| 75 | dito | m-Phenylen | 4 | schwarz |
| 76 | dito | 2',5'-Disulfo-1',4'-phenylen | 4 | grünstichig schwarz |
| 77 | 2"-Methoxy-5"-methyl-4"-(ß-sulfatoäthyl-sulfonyl)-phenyl | 4',6'-Disulfo-1',3' phenylen | 3 | marineblau |
| 78 | dito | 5'-Sulfo-2'-methyl-1',3'-phenylen | 3 | marineblau |
| 79 | dito | 4'-Methyl-1',3'-phenylen | 3 | schwarz |
| 80 | dito | 4'-Methoxy-1',3'-phenylen | 3 | schwarz |

| Bsp. | $B_2$ | $D_1$ | Stellg. von $HO_3S$- | Farbton auf Baumwolle |
|---|---|---|---|---|
| 81 | dito | 4',8'-Disulfo-2',6'-naphthylen | 3 | marineblau |
| 82 | dito | 3',7'-Disulfo -1',5'-naphthylen | 3 | marineblau |
| 83 | dito | p-Phenylen | 3 | grünstichig schwarz |
| 84 | dito | m-Phenylen | 3 | schwarz |
| 85 | dito | 4',6'-Disulfo-1',3'-phenylen | 4 | marineblau |
| 86 | dito | 5'-Sulfo-2'-methyl-1',3'-phenylen | 4 | marineblau |
| 87 | dito | 4'-Methyl-1',3'-phenylen | 4 | schwarz |
| 88 | dito | 4'-Methoxy-1',3'-phenylen | 4 | schwarz |
| 89 | 2"-Methoxy-5"-methyl-4"-(ß-sulfatoäthyl-sulfonyl)-phenyl | 4',8'-Disulfo-2',6'-naphthylen | 4 | marineblau |
| 90 | dito | 3',7'-Disulfo-1',5'-naphthylen | 4 | marineblau |
| 91 | dito | p-Phenylen | 4 | grünstichig schwarz |
| 92 | dito | m-Phenylen | 4 | schwarz |
| 93 | dito | 2',5'-Disulfo-1',4'-phenylen | 4 | grünstichig schwarz |
| 94 | 2",5"-Dimethoxy-4"-(ß-sulfatoäthylsulfonyl)-phenyl | 4',6'-Disulfo-1',3'-phenylen | 3 | marineblau |
| 95 | dito | 5'-Sulfo-2'-methyl-1',3'-phenylen | 3 | marineblau |
| 96 | dito | 4'-Methyl-1',3'-phenylen | 3 | schwarz |
| 97 | dito | 4'-Methoxy-1',3'-phenylen | 3 | schwarz |
| 98 | dito | 4',8'-Disulfo-2',6'-naphthylen | 3 | marineblau |
| 99 | dito | 3',7'-Disulfo -1',5'-naphthylen | 3 | marineblau |
| 100 | dito | p-Phenylen | 3 | grünstichig schwarz |
| 101 | dito | m-Phenylen | 3 | schwarz |
| 102 | dito | 4',6'-Disulfo-1',3'-phenylen | 4 | marineblau |
| 103 | dito | 5'-Sulfo-2'-methyl-1',3'-phenylen | 4 | marineblau |
| 104 | dito | 4'-Methyl-1',3'-phenylen | 4 | schwarz |
| 105 | dito | 4'-Methoxy-1',3'-phenylen | 4 | schwarz |
| 106 | dito | 4',8'-Disulfo-2',6'-naphthylen | 4 | marineblau |
| 107 | dito | 3',7'-Disulfo-1',5'-naphthylen | 4 | marineblau |

| Bsp. | $B_2$ | $D_1$ | Stellg. von $HO_3S$- | Farbton auf Baumwolle |
|---|---|---|---|---|
| 108 | dito | p-Phenylen | 4 | grünstichig schwarz |
| 109 | dito | m-Phenylen | 4 | schwarz |
| 110 | dito | 2',5'-Disulfo-1',4'-phenylen | 4 | grünstichig schwarz |
| 111 | 4"- N-methyl-N-(ß-sulfatoäthylsulfonyl) -phenyl | 4',6'-Disulfo-1',3'-phenylen | 3 | marineblau |
| 112 | dito | 5'-Sulfo-2'-methyl-1',3'-phenylen | 3 | marineblau |
| 113 | dito | 4'-Methyl-1',3'-phenylen | 3 | schwarz |
| 114 | dito | 4'-Methoxy-1',3'-phenylen | 3 | schwarz |
| 115 | dito | 4',8'-Disulfo-2',6'-naphthylen | 3 | marineblau |
| 116 | dito | 3',7'-Disulfo -1',5'-naphthylen | 3 | marineblau |
| 117 | dito | p-Phenylen | 3 | grünstichig schwarz |
| 118 | dito | m-Phenylen | 3 | schwarz |
| 119 | dito | 4',6'-Disulfo-1',3'-phenylen | 4 | marineblau |
| 120 | dito | 5'-Sulfo-2'-methyl-1',3'-phenylen | 4 | marineblau |
| 121 | dito | 4'-Methyl-1',3'-phenylen | 4 | schwarz |
| 122 | dito | 4'-Methoxy-1',3'-phenylen | 4 | schwarz |
| 123 | dito | 4',8'-Disulfo-2',6'-naphthylen | 4 | marineblau |
| 124 | dito | 3',7'-Disulfo-1',5'-naphthylen | 4 | marineblau |
| 125 | dito | p-Phenylen | 4 | grünstichig schwarz |
| 126 | dito | m-Phenylen | 4 | schwarz |
| 127 | dito | 2',5'-Disulfo-1',4'-phenylen | 4 | grünstichig schwarz |
| 128 | 3"-(ß-Sulfatoäthylsulfonyl-methyl)-phenyl | 4',6'-Disulfo-1',3'-phenylen | 3 | marineblau |
| 129 | dito | 5'-Sulfo-2'-methyl-1',3'-phenylen | 3 | marineblau |
| 130 | dito | 4'-Methyl-1',3'-phenylen | 3 | schwarz |
| 131 | dito | 4'-Methoxy-1',3'-phenylen | 3 | schwarz |
| 132 | dito | 4',8'-Disulfo-2',6'-naphthylen | 3 | marineblau |
| 133 | 3"-(ß-Sulfatoäthylsulfonyl-methyl)-phenyl | 3',7'-Disulfo -1',5'-naphthylen | 3 | marineblau |
| 134 | dito | p-Phenylen | 3 | grünstichig schwarz |

| Bsp. | $B_2$ | $D_1$ | Stellg. von $HO_3S$- | Farbton auf Baumwolle |
|---|---|---|---|---|
| 135 | dito | m-Phenylen | 3 | schwarz |
| 136 | dito | 4',6'-Disulfo-1',3'-phenylen | 4 | marineblau |
| 137 | dito | 5'-Sulfo-2'-methyl-1',3'-phenylen | 4 | marineblau |
| 138 | dito | 4'-Methyl-1',3'-phenylen | 4 | schwarz |
| 139 | dito | 4'-Methoxy-1',3'-phenylen | 4 | schwarz |
| 140 | dito | 4',8'-Disulfo-2',6'-naphthylen | 4 | marineblau |
| 141 | dito | 3',7'-Disulfo-1',5'-naphthylen | 4 | marineblau |
| 142 | dito | p-Phenylen | 4 | grünstichig schwarz |
| 143 | dito | m-Phenylen | 4 | schwarz |
| 144 | dito | 2',5'-Disulfo-1',4'-phenylen | 4 | grünstichig schwarz |
| 145 | 6"-Methyl-3"-(ß-sulfatoäthylsulfonyl)-phenyl | 4',6'-Disulfo-1',3'-phenylen | 3 | marineblau |
| 146 | dito | 5'-Sulfo-2'-methyl-1',3'-phenylen | 3 | marineblau |
| 147 | dito | 4'-Methyl-1',3'-phenylen | 3 | schwarz |
| 148 | dito | 4'-Methoxy-1',3'-phenylen | 3 | schwarz |
| 149 | dito | 4',8'-Disulfo-2',6'-naphthylen | 3 | marineblau |
| 150 | dito | 3',7'-Disulfo-1',5'-naphthylen | 3 | marineblau |
| 151 | dito | p-Phenylen | 3 | grünstichig schwarz |
| 152 | dito | m-Phenylen | 3 | schwarz |
| 153 | dito | 4',6'-Disulfo-1',3'-phenylen | 4 | marineblau |
| 154 | dito | 5'-Sulfo-2'-methyl-1',3'-phenylen | 4 | marineblau |
| 155 | 6"-Methyl-3"-(ß-sulfatoäthylsulfonyl)-phenyl | 4'-Methyl-1',3'-phenylen | 4 | schwarz |
| 156 | dito | 4'-Methoxy-1',3'-phenylen | 4 | schwarz |
| 157 | dito | 4',8'-Disulfo-2',6'-naphthylen | 4 | marineblau |
| 158 | dito | 3',7'-Disulfo-1',5'-naphthylen | 4 | marineblau |
| 159 | dito | p-Phenylen | 4 | grünstichig schwarz |
| 160 | dito | m-Phenylen | 4 | schwarz |
| 161 | dito | 2',5'-Disulfo-1',4'-phenylen | 4 | grünstichig schwarz |

| Bsp. | $B_2$ | $D_1$ | Stellg. von $HO_3S$- | Farbton auf Baumwolle |
|---|---|---|---|---|
| 162 | 4",6"-Dimethoxy-3"-(ß-sulfatoäthylsulfonyl)-phenyl | 4',6'-Disulfo-1',3'-phenylen | 3 | marineblau |
| 163 | dito | 5'-Sulfo-2'-methyl-1',3'-phenylen | 3 | marineblau |
| 164 | dito | 4'-Methyl-1',3'-phenylen | 3 | schwarz |
| 165 | dito | 4'-Methoxy-1',3'-phenylen | 3 | schwarz |
| 166 | dito | 4',8'-Disulfo-2',6'-naphthylen | 3 | marineblau |
| 167 | dito | 3',7'-Disulfo -1',5'-naphthylen | 3 | marineblau |
| 168 | dito | p-Phenylen | 3 | grünstichig schwarz |
| 169 | dito | m-Phenylen | 3 | schwarz |
| 170 | dito | 4',6'-Disulfo-1',3'-phenylen | 4 | marineblau |
| 171 | dito | 5'-Sulfo-2'-methyl-1',3'-phenylen | 4 | marineblau |
| 172 | dito | 4'-Methyl-1',3'-phenylen | 4 | schwarz |
| 173 | dito | 4'-Methoxy-1',3'-phenylen | 4 | schwarz |
| 174 | dito | 4',8'-Disulfo-2',6'-naphthylen | 4 | marineblau |
| 175 | dito | 3',7'-Disulfo-1',5'-naphthylen | 4 | marineblau |
| 176 | 4",6"-Dimethoxy-3"-(ß-sulfatoäthylsulfonyl)-phenyl | p-Phenylen | 4 | grünstichig schwarz |
| 177 | dito | m-Phenylen | 4 | schwarz |
| 178 | dito | 2',5'-Disulfo-1',4'-phenylen | 4 | grünstichig schwarz |
| 179 | 4"-Methoxy-3"-(ß-sulfatoäthylsulfonyl)-phenyl | 4',6'-Disulfo-1',3'-phenylen | 3 | marineblau |
| 180 | dito | 5'-Sulfo-2'-methyl-1',3'-phenylen | 3 | marineblau |
| 181 | dito | 4'-Methyl-1',3'-phenylen | 3 | schwarz |
| 182 | dito | 4'-Methoxy-1',3'-phenylen | 3 | schwarz |
| 183 | dito | 4',8'-Disulfo-2',6'-naphthylen | 3 | marineblau |
| 184 | dito | 3',7'-Disulfo -1',5'-naphthylen | 3 | marineblau |
| 185 | dito | p-Phenylen | 3 | grünstichig schwarz |
| 186 | dito | m-Phenylen | 3 | schwarz |
| 187 | dito | 4',6'-Disulfo-1',3'-phenylen | 4 | marineblau |

| Bsp | $B_2$ | $D_1$ | Stellg von $HO_3S$- | Farbton auf Baumwolle |
|---|---|---|---|---|
| 188 | dito | 5'-Sulfo-2'-methyl-1',3'-phenylen | 4 | marineblau |
| 189 | dito | 4'-Methyl-1',3'-phenylen | 4 | schwarz |
| 190 | dito | 4'-Methoxy-1',3'-phenylen | 4 | schwarz |
| 191 | dito | 4',8'-Disulfo-2',6'-naphthylen | 4 | marineblau |
| 192 | dito | 3',7'-Disulfo-1',5'-naphthylen | 4 | marineblau |
| 193 | dito | p-Phenylen | 4 | grünstichig schwarz |
| 194 | dito | m-Phenylen | 4 | schwarz |
| 195 | dito | 2',5'-Disulfo-1',4'-phenylen | 4 | grünstichig schwarz |
| 196 | 1"-Sulfo-6"-(ß-sulfatoäthylsulfonyl)-2"-naphthyl | 4',6'-Disulfo-1',3'-phenylen | 3 | marineblau |
| 197 | dito | 5'-Sulfo-2'-methyl-1',3'-phenylen | 3 | marineblau |
| 198 | dito | 4'-Methyl-1',3'-phenylen | 3 | schwarz |
| 199 | dito | 4'-Methoxy-1',3'-phenylen | 3 | schwarz |
| 200 | dito | 4',8'-Disulfo-2',6'-naphthylen | 3 | marineblau |
| 201 | dito | 3',7'-Disulfo -1',5'-naphthylen | 3 | marineblau |
| 202 | dito | p-Phenylen | 3 | grünstichig schwarz |
| 203 | dito | m-Phenylen | 3 | schwarz |
| 204 | dito | 4',6'-Disulfo-1',3'-phenylen | 4 | marineblau |
| 205 | dito | 5'-Sulfo-2'-methyl-1',3'-phenylen | 4 | marineblau |
| 206 | dito | 4'-Methyl-1',3'-phenylen | 4 | schwarz |
| 207 | dito | 4'-Methoxy-1',3'-phenylen | 4 | schwarz |
| 208 | dito | 4',8'-Disulfo-2',6'-naphthylen | 4 | marineblau |
| 209 | dito | 3',7'-Disulfo-1',5'-naphthylen | 4 | marineblau |
| 210 | dito | p-Phenylen | 4 | grünstichig schwarz |
| 211 | dito | m-Phenylen | 4 | schwarz |
| 212 | dito | 2',5'-Disulfo-1',4'-phenylen | 4 | grünstichig schwarz |
| 213 | 6"-Sulfo-8"-(ß-sulfatoäthylsulfonyl)-2"-naphthyl | 4',6'-Disulfo-1',3'-phenylen | 3 | marineblau |
| 214 | dito | 5'-Sulfo-2'-methyl-1',3'-phenylen | 3 | marineblau |

| Bsp. | $B_2$ | $D_1$ | Stellg. von $HO_3S$- | Farbton auf Baumwolle |
|---|---|---|---|---|
| 215 | dito | 4'-Methyl-1',3'-phenylen | 3 | schwarz |
| 216 | dito | 4'-Methoxy-1',3'-phenylen | 3 | schwarz |
| 217 | 6"-Sulfo-8"-(β-sulfatoäthylsulfonyl)-2"-naphthyl | 4',8'-Disulfo-2',6'-naphthylen | 3 | marineblau |
| 218 | dito | 3',7'-Disulfo-1',5'-naphthylen | 3 | marineblau |
| 219 | dito | p-Phenylen | 3 | grünstichig schwarz |
| 220 | dito | m-Phenylen | 3 | schwarz |
| 221 | dito | 4',6'-Disulfo-1',3'-phenylen | 4 | marineblau |
| 222 | dito | 5'-Sulfo-2'-methyl-1',3'-phenylen | 4 | marineblau |
| 223 | dito | 4'-Methyl-1',3'-phenylen | 4 | schwarz |
| 224 | dito | 4'-Methoxy-1',3'-phenylen | 4 | schwarz |
| 225 | dito | 4',8'-Disulfo-2',6'-naphthylen | 4 | marineblau |
| 226 | dito | 3',7'-Disulfo-1',5'-naphthylen | 4 | marineblau |
| 227 | dito | p-Phenylen | 4 | grünstichig schwarz |
| 228 | dito | m-Phenylen | 4 | schwarz |
| 229 | dito | 2',5'-Disulfo-1',4'-phenylen | 4 | grünstichig schwarz |

Beispiel 230

Eine neutrale Lösung von 28,1 Teilen Anilin-4-β-sulfatoäthylsulfon in 100 Teilen Wasser wird unter Rühren in eine Suspension gegossen, die durch Einrühren einer Lösung von 19,5 Teilen Cyanurchlorid in 100 Volumenteilen Aceton in ein Gemisch aus 200 Teilen Wasser und 200 Teilen Eis erhalten wird. Dieses Reaktionsgemisch wird bei einer Temperatur von 0 bis 5 °C und einem pH-Wert von 3 bis 4 eine Stunde lang gerührt, wobei der pH-Wert mittels etwa 8,4 Teilen Natriumbicarbonat gehalten wird. Anschließend wird zu der erhaltenen Suspension des primären Kondensationsproduktes eine neutrale Lösung von 26,8 Teilen 1,4-Diaminobenzol-2,5-disulfonsäure in 200 Teilen Wasser gegeben ; dieser Reaktionsansatz wird bei 25 bis 28 °C und bei einem pH-Wert von 6,5 bis 7,2 etwa 18 Stunden lang gerührt. Das gebildete sekundäre Reaktionsprodukt ist in der erhaltenen Lösung klar gelöst ; zu dieser Lösung gibt man 250 Teile Eis und 60 Volumenteile einer 31 %igen wäßrigen Salzsäure und diazotiert sodann bei einer Temperatur von 0 bis 5 °C durch tropfenweise Zugabe von 20 Volumenteilen einer wäßrigen 5n-Natriumnitritlösung. Die erhaltene Diazoniumsalzlösung wird bei einer Temperatur zwischen 0 und 10 °C und bei einem pH-Wert von 2,5 bis 3,0 in eine Lösung von 31,9 Teilen 1-Amino-8-naphthol-3,6-disulfonsäure in 1 500 Teilen Wasser eingetropft, wobei der pH-Wert durch portionsweises Eintragen von 63 Teilen kristallisiertem Natriumacetat gehalten wird. Nach beendeter Kupplung wird die gebildete Monoazoverbindung mittels Kaliumchlorid ausgefällt und abgesaugt.

Der feuchte Filterkuchen der Monoazoverbindung wird in 500 Teilen Wasser gelöst und diese Lösung mit einer Diazoniumsalzlösung versetzt, die wie nachfolgend angegeben hergestellt wird : Eine Lösung von 19,5 Teilen Cyanurchlorid in 100 Volumenteilen Aceton wird unter Rühren in ein Gemisch aus 200 Teilen Wasser und 200 Teilen Eis einfließen lassen. Zu dieser Suspension gibt man eine neutrale Lösung von 34,1 Teilen 2,5-Dimethoxyanilin-4-β-sulfatoäthylsulfon in einem Gemisch aus 140 Teilen Wasser und

60 Teilen Eis ; die Kondensationsreaktion wird bei einem pH-Wert von 3,0 bis 4,5 durchgeführt, welcher mittels Natriumbicarbonat eingehalten wird. Nach einstündigem Rühren gibt man eine neutrale Lösung von 18,8 Teilen 1,4-Diaminobenzol-2-sulfonsäure in 200 Teilen Wasser zu dem so hergestellten primären Kondensationsprodukt und führt die zweite Kondensationsreaktion während 10 Stunden bei einem pH-Wert von 6,2 bis 6,8 und einer Temperatur von 28 bis 30 °C durch. Die erhaltene Lösung des sekundären Kondensationsproduktes wird anschließend mit 40 Volumenteilen einer 31 %igen wäßrigen Salzsäure versetzt, auf 0 bis 5 °C gekühlt und mittels 20 Volumenteilen einer wäßrigen 5n-Natriumnitritlösung diazotiert. Diese Diazoniumsalzlösung wird mit Natriumbicarbonat auf einen pH-Wert von 5,5 bis 5,8 gestellt und, wie oben erwähnt, zu der Lösung der Monoazoverbindung gegeben.

Diese zweite Kupplungsreaktion führt man bei einem pH-Wert von 5,5 bis 6,5 und bei einer Temperatur von 23 bis 25 °C durch. Die gebildete Disazoverbindung wird mittels Kaliumchlorid ausgefällt, abgesaugt, getrocknet und gemahlen. Man erhält ein schwarzes, elektrolythaltiges (vorwiegend Kaliumchlorid) Pulver, das das Alkalimetallsalz, vorwiegend Kaliumsalz, der Verbindung der Formel

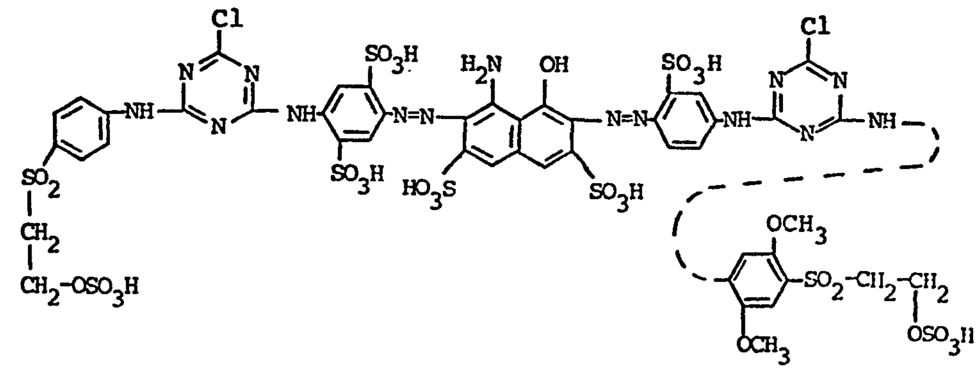

enthält. Diese Verbindung besitzt sehr gute Farbstoffeigenschaften und liefert nach den für faserreaktive Farbstoffe üblichen Applikations- und Fixierverfahren auf Cellulosefasermaterialien Färbungen und Drucke mit grünstichig schwarzer Nuance von sehr guten Gebrauchs- und Fabrikationsechtheiten, wie insbesondere die sehr gute Waschechtheit, Schweiß-, Wasser-, Meerwasser-, Säure- und Alkaliechtheit, weiterhin sehr gute Reib- und Plissierechtheiten.

Beispiele 231 bis 237

Verfährt man in erfindungsgemäßer Verfahrensweise zur Herstellung der erfindungsgemäßen Verbindungen der allgemeinen Formel (1) analog den Angaben des Beispieles 230, setzt jedoch anstelle der dort angegebenen Reaktionskomponenten die aus den nachfolgenden Tabellenbeispielen in Verbindung mit der allgemeinen Formel (C) ersichtlichen Ausgangskomponenten (Anilinderivate mit der β-Sulfatoäthylsulfonylgruppe, Cyanurchlorid und einer Diaminobenzol-mono- oder -disulfonsäure für die beiden sekundären Kondensationsprodukte, die als Diazokomponente dienen, sowie die 1-Amino-8-naphthol-3,6- oder -4,6-disulfonsäure als Kupplungskomponente) ein, so erhält man die in diesen Tabellensbeispielen unter Bezugnahme auf die allgemeine Formel (C) genannten erfindungsgemäßen Disazoverbindungen, die sehr gute Farbstoffeigenschaften besitzen und nach den in der Technik üblichen Applikations- und Fixiermethoden für fasserreaktive Farbstoffe Färbungen und Drucke mit guten Echtheiten in den in den Tabellenbeispielen angegebenen Farbtönen liefern.

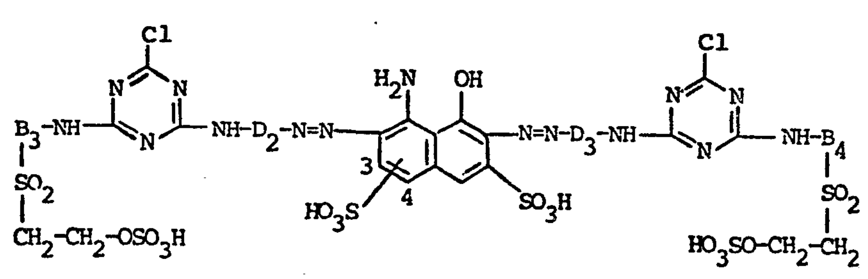 (C)

(Siehe Tabelle Seite 20 ff.)

| Bsp. | $B_3$ | $B_4$ | $D_2$ | $D_3$ | Stellg. von $HO_3S$- | Farbton auf Baumwolle |
|---|---|---|---|---|---|---|
| 231 | 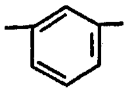 | 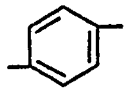 | 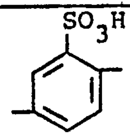 | 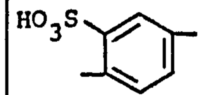 | 3 | grünstichig schwarz |
| 232 | 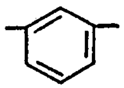 | 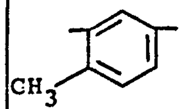 | 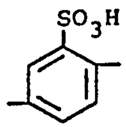 | 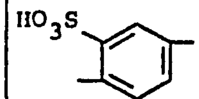 | 3 | grünstichig marineblau |
| 233 | 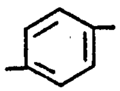 | 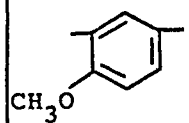 | 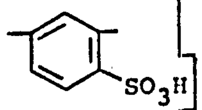 | 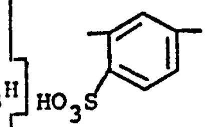 | 3 | marineblau |
| 234 | 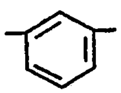 | 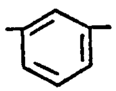 | 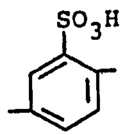 | 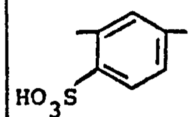 | 3 | marineblau |
| 235 | 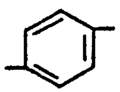 | 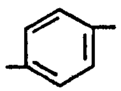 | 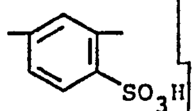 | 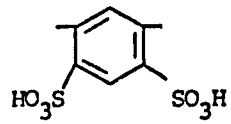 | 4 | dunkelblau |
| 236 | 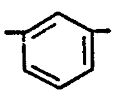 | 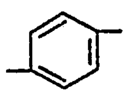 | 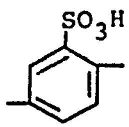 | 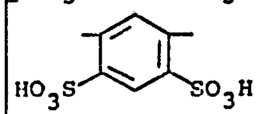 | 4 | dunkelblau |
| 237 | 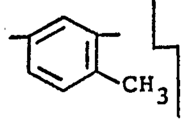 | 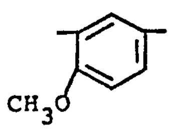 | 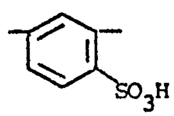 | 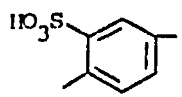 | 3 | marineblau |

Beispiel 238

Man verfährt in der im Beispiel 1 angegebenen Verfahrensweise, ersetzt jedoch das Anilin-4-β-sulfatoäthylsulfon jeweils durch die äquivalente Menge (29,7 Teile) Anilin-4-β-thiosulfatoäthylsulfon. Es wird ein elektrolythaltiges Farbstoffpulver erhalten, das das Alkalimetallsalz der Verbindung der Formel

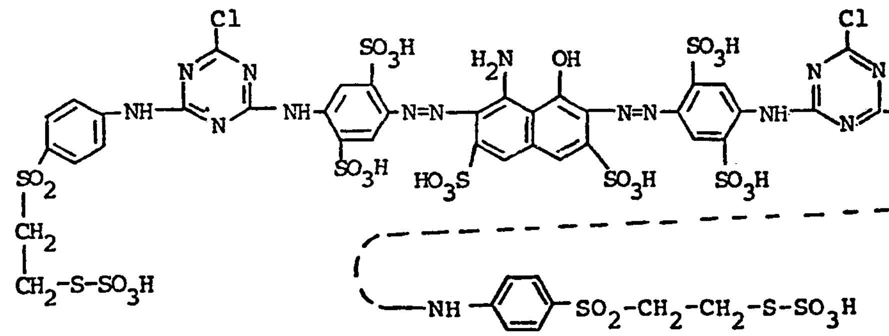

enthält. Diese Disazoverbindung stellt ebenfalls einen sehr guten Farbstoff dar, der im Vergleich zu dem Farbstoff des Beispieles 1 ähnlich gute coloristische Eigenschaften und Echtheiten aufweist. Er läßt sich auf natürlichen und synthetischen Polyamidfasermaterialien, insbesondere jedoch auf natürlichen und regenerierten Cellulosefasermaterialien, wie vorzugsweise Baumwolle, nach den insbesondere für faserreaktive Farbstoffe üblichen Applikations- und Fixiermethoden anwenden.

Beispiel 239

Man stellt gemäß den Angaben des Beispieles 1 die Monoazoverbindung her und löst sie in 500 Teilen Wasser. Die zweite Kupplungsreaktion wird mit einer anderen Diazoniumverbindung durchgeführt, die wie folgt hergestellt wird : Eine Lösung von 19,5 Teilen Cyanurchlorid in 100 Volumenteilen Aceton wird in ein Gemisch aus 200 Teilen Wasser und 100 Teilen Eis eingerührt. Zu dieser Suspension gibt man eine Lösung aus 17,3 Teilen Anilin-3-sulfonsäure in 100 Teilen Wasser und 50 Volumenteilen einer wäßrigen 5n-Natronlauge ; die Kondensationsreaktion wird bei 0 °C und bei einem pH-Wert von 3 bis 4 durchgeführt, wobei dieser pH mittels Natriumbicarbonat gehalten wird. Nach einer Stunde gibt man eine neutrale Lösung von 18,8 Teilen 1,4-Diaminobenzol-2-sulfonsäure in 200 Teilen Wasser hinzu und läßt die zweite Kondensationsreaktion bei einem pH-Wert von 5,5 bis 6,5 und einer Temperatur von 25 bis 28 °C unter mehrstündigem Rühren ablaufen. Nach beendeter Kondensation wird die Lösung geklärt, mit 35 Volumenteilen einer 31 %igen wäßrigen Salzsäure angesäuert, mit 500 Teilen Eis versetzt und durch langsame Zugabe von 20 Volumenteilen einer wäßrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Kaliumchlorid ausgesalzen, abgesaugt und getrocknet. Es wird ein schwarzes, elektrolythaltiges (vorwiegend Kaliumchlorid) Farbstoffpulver erhalten, das zu etwa 40 bis 45 % das Alkalimetallsalz, vorwiegend Kaliumsalz der Verbindung der Formel

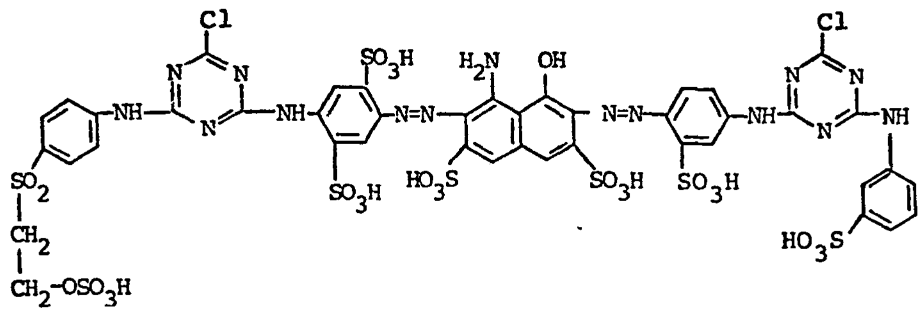

enthält. Diese Verbindung zeigt sehr gute Farbstoffeigenschaften und liefert nach den für faserreaktive Farbstoffe üblichen Applikations- und Fixiermethoden auf Cellulosefasermaterialien, wie Baumwolle, grünstichig schwarze Färbungen und Drucke mit sehr guten Gebrauchs- und Fabrikationsechtheiten, wie beispielsweise die sehr gute Waschechtheit, Schweiß-, Reib-, Säure- und Alkaliechtheit.

Beispiele 240 bis 255

Verfährt man in erfindungsgemäßer Verfahrensweise zur Herstellung der erfindungsgemäßen Verbindungen der allgemeinen Formel (1) analog den Angaben des Beispieles 239, setzt jedoch anstelle der dort angegebenen Reaktionskomponenten die aus den nachfolgenden Tabellenbeispielen in Verbindung mit den allgemeinen Formeln (D) und (E) ersichtlichen Ausgangskomponenten (Anilinderivate, die eine β-Sulfatoäthylsulfonylgruppe besitzen oder von dieser frei sind, Cyanurchlorid und eine Diaminobenzol-Verbindung für die beiden sekundären Kondensationsprodukte, die als Diazokomponente dienen, sowie die 1-Amino-8-naphthol-3,6- oder -4,6-disulfonsäure als Kupplungskomponente) ein, so erhält man die in diesen Tabellenbeispielen unter Bezugnahme auf die allgemeinen Formeln (D) und (E) genannten erfindungsgemäßen Disazoverbindungen, die sehr gute Farbstoffeigenschaften besitzen und nach den in der Technik üblichen Applikations- und Fixiermethoden für faserreaktive Farbstoffe Färbungen und Drucke mit guten Echtheiten in den in den Tabellenbeispielen angegebenen Farbtönen liefern.

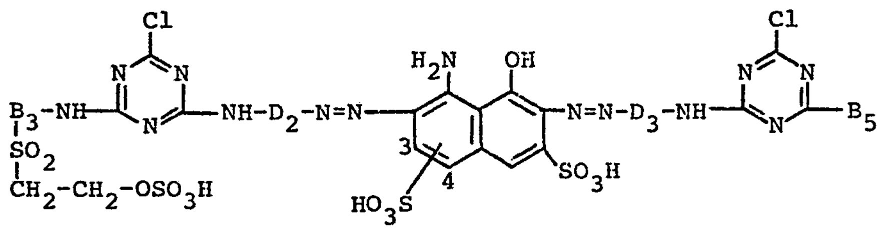

(D)

(Siehe Tabelle Seite 23 ff.)

| Bsp. | $B_3$ | $D_2$ | $D_3$ | $B_5$ | Stellg. von $HO_3S-$ | Farbton auf Baumwolle |
|---|---|---|---|---|---|---|
| 240 | 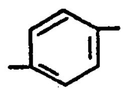 | 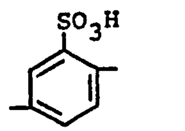 | 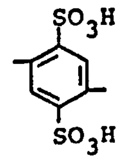 | 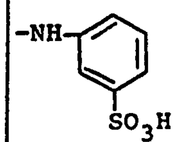 | 3 | grünstichig schwarz |
| 241 | 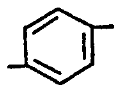 | dito | dito | 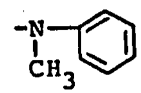 | 3 | grünstichig schwarz |
| 242 | 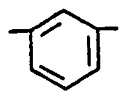 | dito | 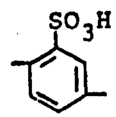 | 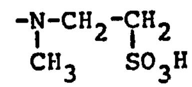 | 3 | grünstichig marineblau |
| 243 | 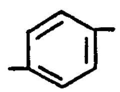 | 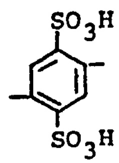 | dito | $-NH_2$ | 3 | schwarz |
| 244 | 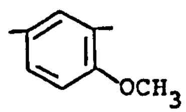 | 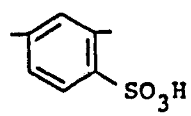 | 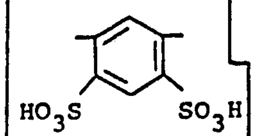 | $-N(C_2H_5)_2$ | 3 | rotstichig marineblau |
| 245 | 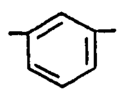 | 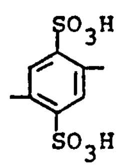 | 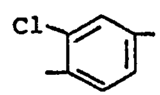 | 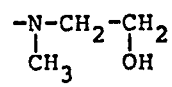 | 3 | dunkelblau |
| 246 | 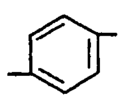 | 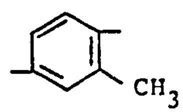 | 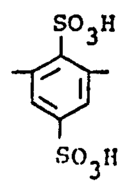 | 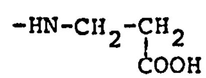 | 4 | marineblau |

| Bsp. | $B_3$ | $D_2$ | $D_3$ | $B_5$ | Stellg. von $HO_3S$- | Farbton auf Baumwolle |
|---|---|---|---|---|---|---|
| 247 | 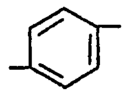 | 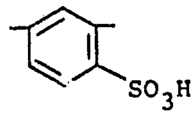 | 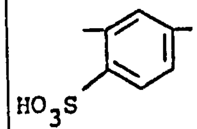 | 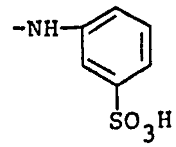 | 3 | schwarz |

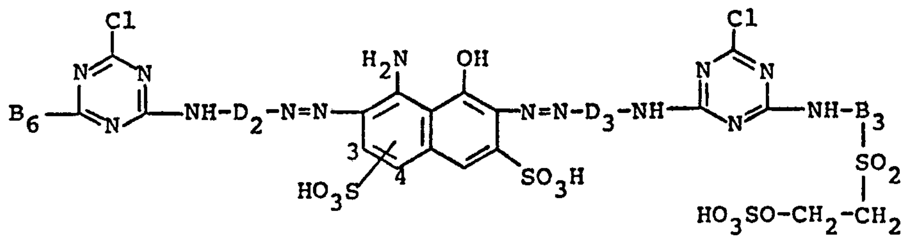

(E)

| Bsp. | $B_6$ | $D_2$ | $D_3$ | $B_3$ | Stellg. von $HO_3S$ - | Farbton auf Baumwolle |
|---|---|---|---|---|---|---|
| 248 | $CH_2-CH_2-NH-$<br>$\vert$<br>$COOH$ | 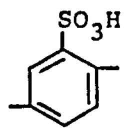 | 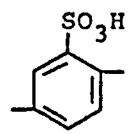 | 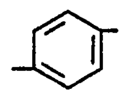 | 3 | grünstichig marineblau |
| 249 | 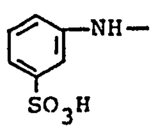 | 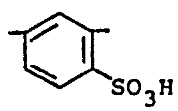 | 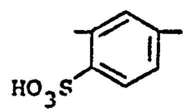 | 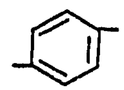 | 3 | schwarz |

| Bsp. | $B_6$ | $D_2$ | $D_3$ | $B_3$ | Stellg. von $HO_3S-$ | Farbton auf Baumwolle |
|---|---|---|---|---|---|---|
| 250 | 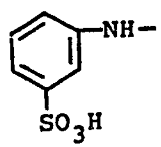 | 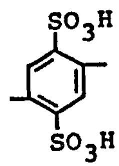 | 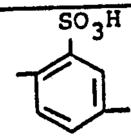 | 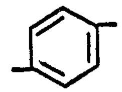 | 3 | marineblau |
| 251 | $H_2N-$ | 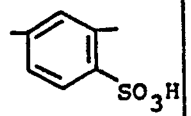 | 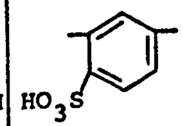 | 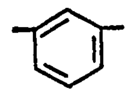 | 3 | marineblau |
| 252 | 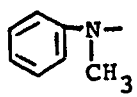 | 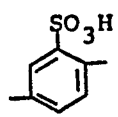 | 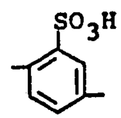 | 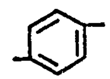 | 3 | grünstichig marineblau |
| 253 | 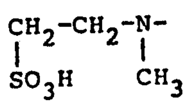 | dito | 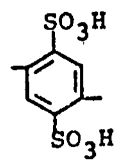 | 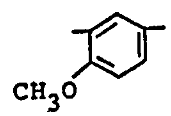 | 3 | grünstichig marineblau |
| 254 | 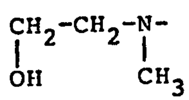 | 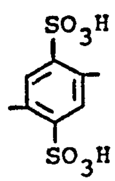 | 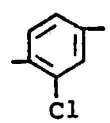 | 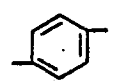 | 4 | dunkelblau |
| 255 | 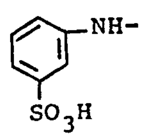 | 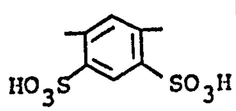 | 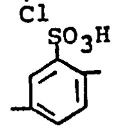 | 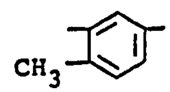 | 3 | schwarz |

Beispiel 256

Gemäß den Angaben des Beispieles 1 wird die Monoazoverbindung hergestellt und in 500 Teilen Wasser gelöst. Die zweite Kupplungsreaktion erfolgt mit einem Diazoniumsalz, das wie nachstehend beschrieben hergestellt wird : 28,1 Teile Anilin-4-β-sulfatoäthylsulfon werden in einem Gemisch aus 100 Teilen Wasser und 50 Teilen Eis suspendiert und durch Zugabe von 7,3 Teilen Natriumcarbonat neutral gelöst. Sodann fügt man 20,3 Volumenteile einer wäßrigen 5n-Natriumnitritlösung hinzu und läßt dieses Gemisch auf eine Mischung aus 26 Volumenteilen einer 31 %igen wäßrigen Salzsäure und 150 Teilen Eis laufen. Die erhaltene Suspension wird noch eine Stunde weitergerührt, sodann überschüssige salpetrige Säure mit Amidosulfonsäure zerstört und das Reaktionsprodukt mit 7 Teilen Natriumbicarbonat auf einen pH-Wert von 5,7 bis 6,2 gestellt. — Die Lösung der Monoazoverbindung wird, wie oben erwähnt, zu der so hergestellten Diazoniumsalzsuspension gegeben, wobei der pH-Wert durch portionsweise Zugabe von 16,3 Teilen Natriumbicarbonat auf 5,7 bis 6,2 gehalten wird. Nach mehrstündigem Rühren ist die Kupplung beendet und die gebildete Disazoverbindung wird mit Kaliumchlorid ausgesalzen, abgesaugt und getrocknet.

Es wird ein schwarzes, elektrolythaltiges Pulver erhalten, das zu etwa 45 % das Alkalimetallsalz, vorwiegend Kaliumsalz, der Verbindung der Formel

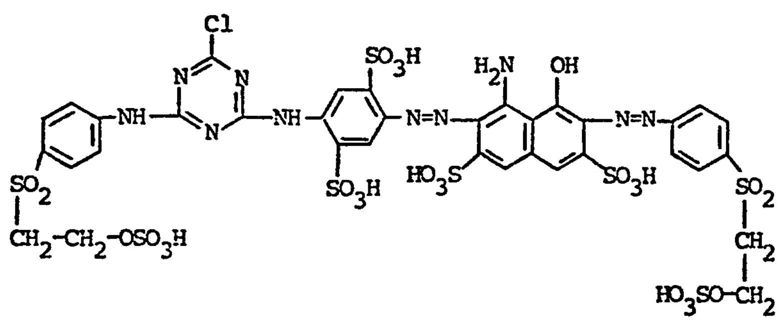

enthält. Diese zeigt sehr gute Farbstoffeigenschaften und liefert nach den für faserreaktive Farbstoffe üblichen Applikations- und Fixiermethoden auf Cellulosefasermaterialien kräftige schwarze Färbungen von sehr guten Gebrauchs- und Fabrikationsechtheiten, wie insbesondere die sehr gute Wasch-, Meerwasser- und Schweißechtheit. Daneben weist der Farbstoff einen sehr hohen Fixiergrad und eine gute Auswaschbarkeit der nicht fixierten Anteile auf.

Beispiele 257 bis 265

Man verfährt in erfindungsgemäßer Weise analog der in Beispiel 256 beschriebenen Verfahrensweise zur Herstellung einer erfindungsgemäßen Disazoverbindung, setzt jedoch anstelle der dort angegebenen Reaktionskomponenten die aus den nachfolgenden Tabellenbeispielen in Verbindung mit der allgemeinen Formel (F) ersichtlichen Reaktionskomponenten (Anilinverbindung mit einer β-Sulfatoäthylsulfonylgruppe, Cyanurchlorid und eine Diaminobenzolverbindung zur Herstellung des als Diazokomponente dienenden Kondensationsproduktes, 1-Amino-8-naphthol-3,6- oder -4,6-disulfonsäure und eine Anilinverbindung mit einer β-Sulfatoäthylsulfonylgruppe als zweite Diazokomponente) ein, so erhält man die in den Tabellenbeispielen unter Bezugnahme auf die Formel (F) angegebenen erfindungsgemäßen Disazoverbindungen, die ebenfalls sehr gute Farbstoffeigenschaften besitzen und nach den für faserreaktive Farbstoffe üblichen Applikations- und Fixiermethoden auf bevorzugt Cellulosefasermaterialien farbkräftige Färbungen und Drucke mit den in den Beispielen angegebenen Nuancen liefern. Auch diese Färbungen und Drucke zeichnen sich durch gute Echtheiten aus.

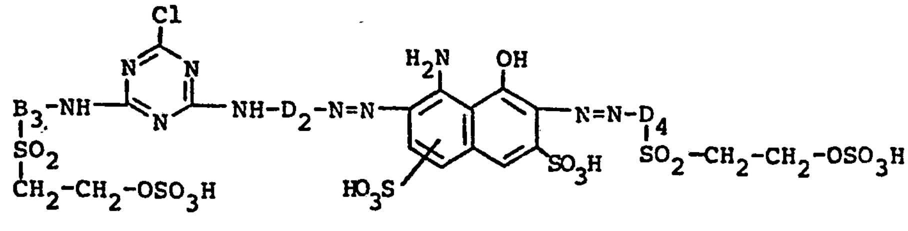

(F)

| Bsp. | $B_3$ | $D_2$ | $D_4$ | Stellg. von $HO_3S$- | Farbton auf Baumwolle |
|---|---|---|---|---|---|
| 257 | 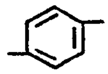 | 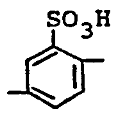 | 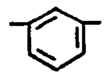 | 3 | schwarz |
| 258 | 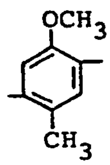 | dito | 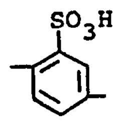 | 3 | schwarz |
| 259 | 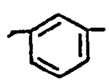 | dito | 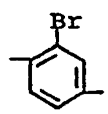 | 3 | schwarz |
| 260 | 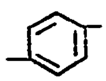 | 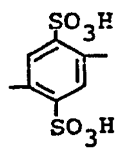 | 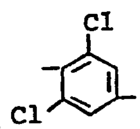 | 3 | schwarz |
| 261 | 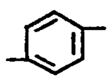 | 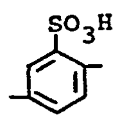 | 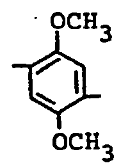 | 3 | grünstichig marineblau |
| 262 | 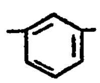 | dito | 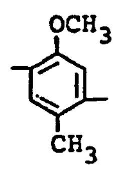 | 3 | marineblau |
| 263 | 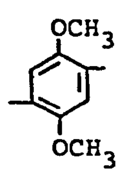 | 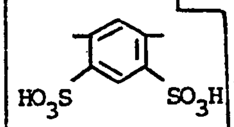 | 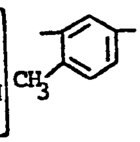 | 4 | rotstichig schwarz |
| 264 | 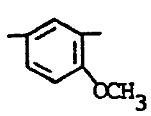 | 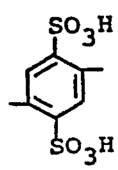 | 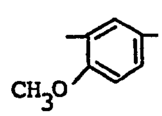 | 3 | schwarz |
| 265 | 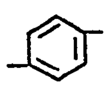 | 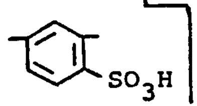 | 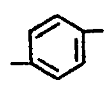 | 3 | schwarz |

Beispiel 266

Ein Gemisch aus einer neutralen Lösung von 28,1 Teilen Anilin-4-β-sulfatoäthylsulfon in 150 Teilen Wasser und 20,3 Volumenteilen einer wäßrigen 5n-Natriumnitritlösung wird bei 0 bis 5 °C unter Rühren in ein Gemisch aus 26 Volumenteilen einer 31 %igen wäßrigen Salzsäure und 150 Teilen Eis einlaufen lassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 3 bis 3,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:

Eine neutrale Lösung von 28,1 Teilen Anilin-4-β-sulfatoäthylsulfon in 100 Teilen Wasser wird zu einer Suspension gegossen, die durch Einrühren einer Lösung von 19,5 Teilen Cyanurchlorid in 100 Volumenteilen Aceton in ein Gemisch aus 200 Teilen Wasser und 200 Teilen Eis erhalten wird. Die Kondensationsreaktion wird bei 0 bis 5 °C und einem pH-Wert von 3 bis 4 eine Stunde unter Rühren weitergeführt, wobei der pH-Wert durch portionsweise Zugabe von Natriumbicarbonat (etwa 8,4 Teile) gehalten wird. Die so hergestellte Suspension des primären Kondensationsproduktes wird anschließend mit einer neutralen Lösung von 26,8 Teilen 1,4-Diaminobenzol-2,5-disulfonsäure in 200 Teilen Wasser versetzt und bei 25 bis 28 °C und einem pH-Wert von 6,5 bis 7,2 etwa 18 Stunden lang gerührt. Zu der so erhaltenen klaren Lösung des sekundären Kondensationsproduktes werden 250 Teile Eis und danach 60 Teile einer wäßriger 31 %igen Salzsäure gegeben, und das Kondensationsprodukt wird bei 0 bis 5 °C durch langsame Zugabe von 20 Volumenteilen einer wäßrigen 5n-Natriumnitritlösung diazotiert.

Diese Diazoniumsalzlösung wird mit Natriumbicarbonat auf einen pH-Wert von 5,5 bis 6 gestellt und, wie oben erwähnt, mit der Monoazoverbindung gekuppelt, wobei die Kupplungsreaktion bei einem pH-Wert von 5,8 bis 6,2 durchgeführt wird. Nach mehrstündigem Rühren wird die gebildete Disazoverbindung mit Kaliumchlorid ausgefällt, abgesaugt und getrocknet.

Es wird ein schwarzes, elektrolythaltiges Pulver erhalten, das das Alkalimetallsalz, vorzugsweise Kaliumsalz, der Verbindung der Formel

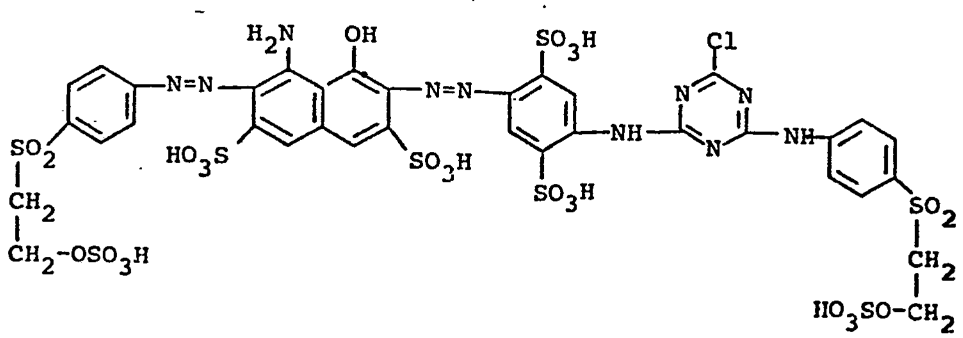

zu etwa 50 % enthält. Diese Disazoverbindung besitzt sehr gute Farbstoffeigenschaften und färbt nach den für Reaktivfarbstoffe üblichen Färbe- und Druckverfahren Cellulosefasermaterialien in schwarzen Tönen mit sehr guten Gebrauchs- und Fabrikationsechtheiten.

Beispiele 267 bis 273

Verfährt man in erfindungsgemäßer Weise zur Herstellung von erfindungsgemäßen Disazoverbindungen, so beispielsweise analog einer der oben angegebenen Verfahrensweisen der Ausführungsbeispiele, vorzugsweise analog dem Beispiel 266, und setzt hierzu entsprechende Reaktionskomponenten (als erste Diazokomponente ein Anilin mit einer β-Sulfatoäthylsulfonylverbindung, als zweite Diazokomponente ein Reaktionsprodukt aus einer Anilinverbindung mit einer β-Sulfatoäthylsulfonylgruppe, Cyanurchlorid und einer Diaminobenzol-Verbindung sowie als Kupplungskomponente 1-Amino-8-naphthol-3,6- oder -4,6-disulfonsäure) ein, wie sie aus den nachfolgenden Tabellenbeispielen in Verbindung mit der allgemeinen Formel (G) ersichtlich sind, so erhält man die in den nachfolgenden Tabellenbeispielen mit den dort angegebenen Formelresten der Formel (G) gekennzeichneten wertvollen Disazoverbindungen entsprechend der allgemeinen Formel (1), die ebenfalls sehr gute Farbstoffeigenschaften besitzen und nach in der Technik üblichen Applikations- und Fixiermethoden für faserreaktive Farbstoffe auf Cellulosefasermaterialien kräftige, echte Färbungen und Drucke mit den in den Beispielen angegebenen Farbtönen liefern.

(Siehe Tabelle Seite 29 f.)

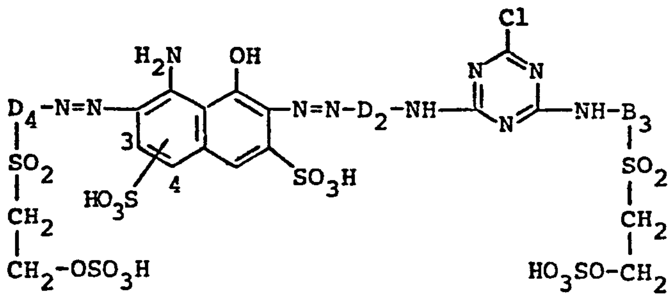

(G)

| Bsp. | $D_4$ | $D_2$ | $B_3$ | Stellg. von $HO_3S$- | Farbton auf Baumwolle |
|---|---|---|---|---|---|
| 267 | 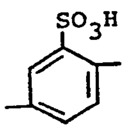 | 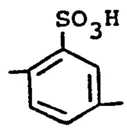 | 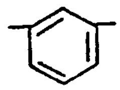 | 3 | schwarz |
| 268 | 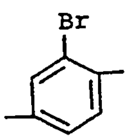 | 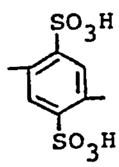 | 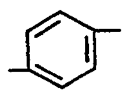 | 3 | grünstichig schwarz |
| 269 | 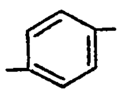 | 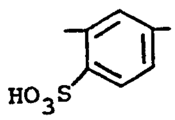 | 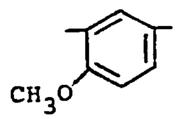 | 3 | marineblau |
| 270 | 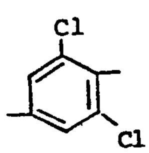 | 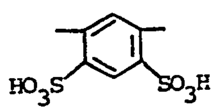 | 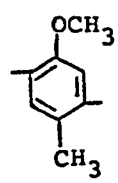 | 3 | dunkelblau |
| 271 | 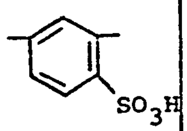 | 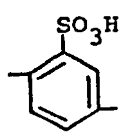 | 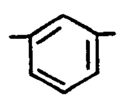 | 4 | marineblau |
| 272 | 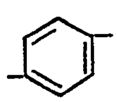 | dito | 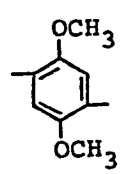 | 3 | schwarz |
| 273 | 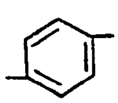 | 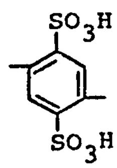 | 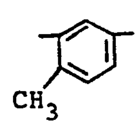 | 4 | schwarz |
| 273a | 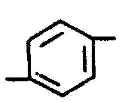 | 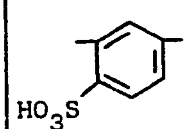 | 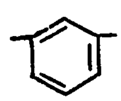 | 3 | marineblau |
| 273b | 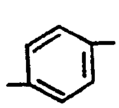 | dito | 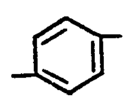 | 3 | marineblau |

Beispiel 274

Es wird die Monoazoverbindung des Beispieles 266 hergestellt und zur Synthese der Disazoverbindung daraus die zweite Kupplungsreaktion gemäß den Angaben des Beispieles 239 durchgeführt. Nach üblicher Isolierung des Farbstoffes erhält man das Alkalimetallsalz der Verbindung der Formel

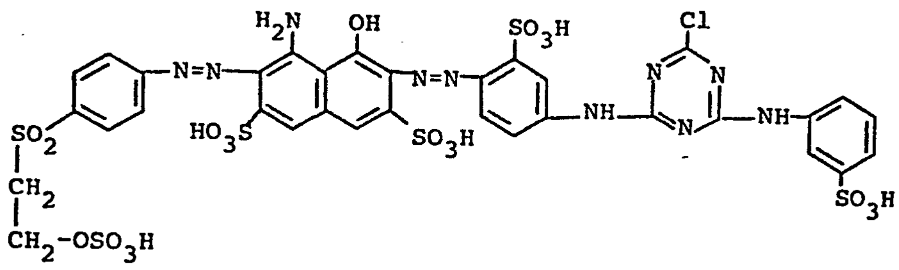

in Form eines schwarzen, elektrolythaltigen Pulvers. Diese Verbindung zeigt sehr gute Farbstoffeigenschaften und liefert nach den in der Technik üblichen Applikations- und Fixierverfahren auf Cellulosefasermaterialien schwarze Färbungen und Drucke mit sehr guten Gebrauchs- und Fabrikationsechtheiten. Auf Wolle werden aus schwach saurem Bade ebenfalls schwarze Färbungen erhalten, deren Naßechtheiten nach ammoniakalischer Nachbehandlung ausgezeichnet sind.

Beispiele 275 bis 280

Man verfährt in erfindungsgemäßer Weise zur Herstellung der Verbindungen der allgemeinen Formel (1) analog einer der obengenannten Ausführungsbeispiele durch Umsetzung einer Diazokomponente mit einer β-Sulfatoäthylsulfonylgruppe mit einer 1-Amino-8-naphthol-3,6- oder -4,6-disulfonsäure mit anschließender Kupplung einer zweiten Diazokomponente aus einem Kondensationsprodukt einer Diaminobenzol-Verbindung mit Cyanurchlorid und einer Aminoverbindung. Setzt man hierfür die in den nachfolgenden Tabellenbeispielen in Verbindung mit der allgemeinen Formel (H) ersichtlichen Ausgangskomponenten ein, so erhält man erfindungsgemäße Disazoverbindungen entsprechend der Formel (H), die sehr wertvolle faserreaktive Farbstoffeigenschaften besitzen und Cellulosefasermaterialien wie auch Wolle in echten Tönen mit den angegebenen Nuancen färben.

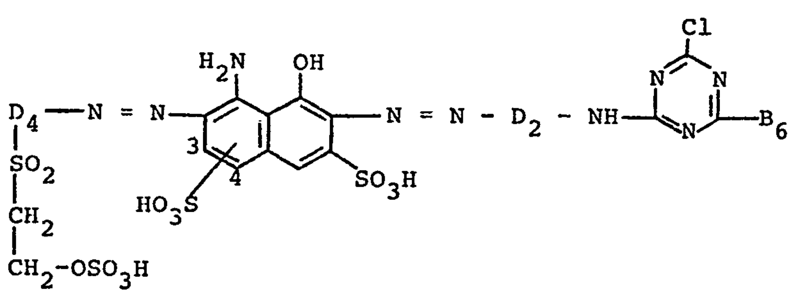

(H)

(Siehe Tabelle Seite 31 f.)

| Bsp. | $D_4$ | $D_2$ | $B_6$ | Stellg. von $HO_3S-$ | Farbton auf Baumwolle |
|---|---|---|---|---|---|
| 275 | 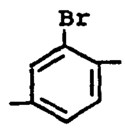 | 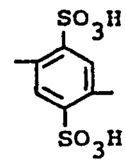 | 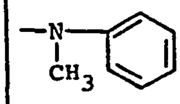 | 3 | schwarz |
| 276 | 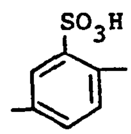 | 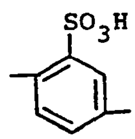 | 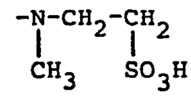 | 3 | schwarz |
| 277 | 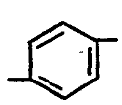 | 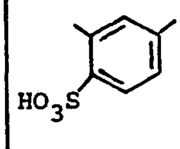 | 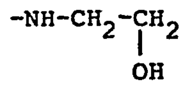 | 3 | marineblau |
| 278 | 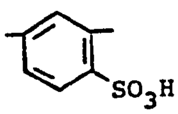 | 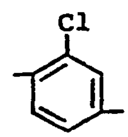 | 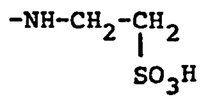 | 3 | schwarz |
| 279 | 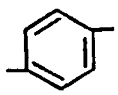 | 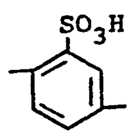 | $-N(C_2H_5)_2$ | 4 | marineblau |
| 280 | 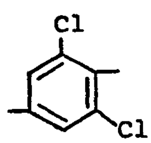 | 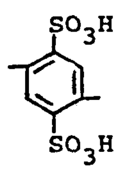 | $-NH_2$ | 3 | grünstichig schwarz |
| 280a | 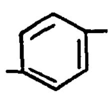 | 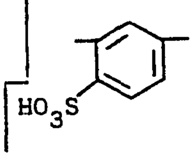 | 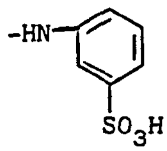 | 3 | marineblau |

Beispiel 281

Eine Lösung von 19,5 Teilen Cyanurchlorid in 100 Volumenteilen Aceton wird in ein Gemisch aus 200 Teilen Wasser und 100 Teilen Eis eingerührt. Zu der so erhaltenen Suspension gibt man eine Lösung aus 17,3 Teilen Anilin-3-sulfonsäure, 100 Teilen Wasser und 50 Volumenteilen einer wäßrigen 2n-Natronlauge. Die erste Kondensationsreaktion wird bei 0 bis 5 °C und bei einem pH-Wert von 3 bis 4 unter einstündigem Rühren durchgeführt. Anschließend wird eine neutrale Lösung von 18,8 Teilen 1,4-Diaminobenzol-2-sulfonsäure in 200 Teilen Wasser zugegeben ; diese zweite Kondensationsreaktion erfolgt bei einem pH-Wert von 5,5 bis 6,5 unter mehrstündigem Rühren bei 25 bis 28 °C. Nach beendeter Kondensation wird die Lösung mit 35 Volumenteilen einer wäßrigen 31 %igen Salzsäure und 500 Teilen Eis versetzt und durch langsame Zugabe von 20 Volumenteilen einer wäßrigen 5n-Natriumnitritlösung bei einer Temperatur von 0 bis 5 °C diazotiert. Nach Zerstörung überschüssiger salpetriger Säure wird die Diazoniumsalzlösung mit Natriumacetat auf einen pH-Wert von 2,5 bis 3,0 gestellt und in der Kälte in eine Lösung von 31,9 Teilen 1-Amino-8-naphthol-3,6-disulfonsäure in 1 500 Teilen Wasser langsam

(tropfenweise) gegeben ; der pH-Wert wird hierbei mittels Natriumacetat bei 2,5 bis 3,0 gehalten. Nach beendeter Kupplung wird die gebildete Monoazoverbindung mit Kaliumchlorid ausgefällt und abgesaugt. Sie wird ohne vorheriges Trocknen in 2 000 Teilen Wasser gelöst. Diese Lösung der Monoazoverbindung wird sodann bei einem pH-Wert von 5,5 bis 6,5 mit einer Diazoniumsalzsuspension aus 28,1 Teilen Anilin-4-β-sulfatoäthylsulfon (vgl. Beispiel 256) versetzt. Die Kupplungsreaktion wird bei diesem pH-Wert unter mehrstündigem Rühren zu Ende geführt, die gebildete Disazoverbindung mit Natriumchlorid ausgefällt, abgesaugt und getrocknet.

Man erhält ein schwarzes, elektrolythaltiges Pulver, das das Alkalimetallsalz, vorwiegend Natriumsalz, der Verbindung der Formel

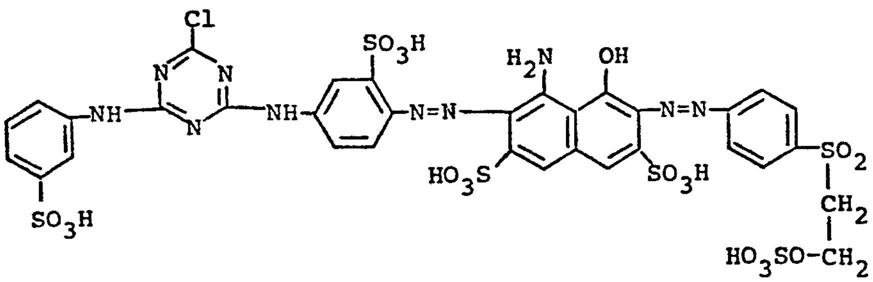

in einem Anteil von etwa 50 % enthält. Diese Disazoverbindung besitzt sehr gute faserreaktive Farbstoffeigenschaften und färbt nach den bekannten und üblichen Methoden Cellulosefasermaterialien, wie Baumwolle, in tiefen schwarzen Tönen von sehr guten Gebrauchs- und Fabrikationsechtheiten, wie insbesondere sehr gute Wasch-, Wasser-, Schweiß-, Alkali- und Säureechtheit.

Beispiele 282 bis 292

Man verfährt in analoger Weise wie im vorherigen Beispiel beschrieben zur Herstellung von erfindungsgemäßen Disazoverbindungen entsprechend der allgemeinen Formel (J)

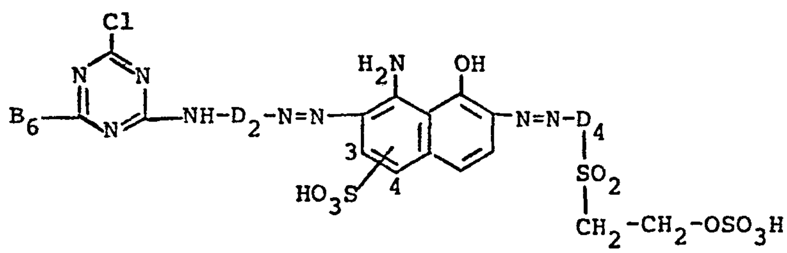

(J)

die in den nachfolgenden Tabellenbeispielen durch die angegebenen Formelreste charakterisiert sind, indem man entsprechend zuerst eine Diazokomponente herstellt, die das Reaktionsprodukt eines Amins, Cyanurchlorid und einer Diaminobenzol-Verbindung ist, diese sodann diazotiert und auf 1-Amino-8-naphthol-3,6- oder -4,6-disulfonsäure kuppelt und darauf die hieraus gebildete Monoazoverbindung mit einem Anilinderivat mit einer β-Sulfatoäthylsulfonylgruppe als zweite Diazokomponente umsetzt. Diese Reaktionskomponenten sind aus den Tabellenbeispielen in Verbindung mit der allgemeinen Formel (J) ersichtlich. Die in diesen Beispielen 282 bis 292 beschriebenen erfindungsgemäßen Disazoverbindungen zeigen ebenfalls sehr gute faserreaktive Farbstoffeigenschaften und liefern beispielsweise auf Baumwollmaterialien echte Färbungen mit den in den Beispielen angegebenen Nuancen.

(Siehe Tabelle Seite 33 f.)

| Bsp. | $B_6$ | $D_2$ | $D_4$ | Stellg. von $HO_3S-$ | Farbton auf Baumwolle |
|---|---|---|---|---|---|
| 282 | 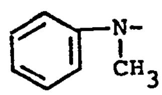 | 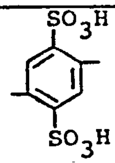 | 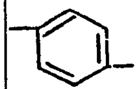 | 3 | grünstichig marineblau |
| 283 | 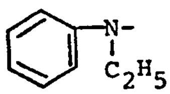 | dito | 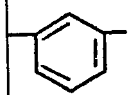 | 3 | marineblau |
| 284 | 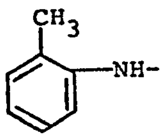 | 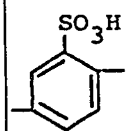 | 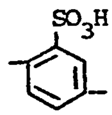 | 3 | schwarz |
| 285 | $CH_2-CH_2-NH-$<br>\|<br>OH | dito | 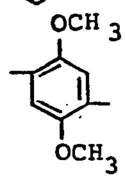 | 3 | grünstichig schwarz |
| 286 | 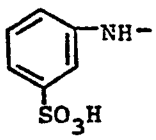 | 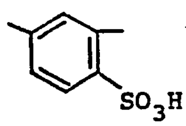 | 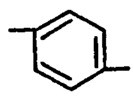 | 3 | schwarz |
| 287 | dito | dito | 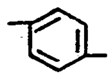 | 4 | schwarz |
| 288 | dito | dito | 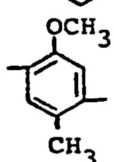 | 3 | schwarz |
| 289 | $H_2N-$ | 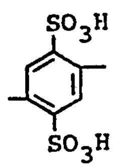 | 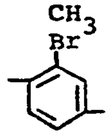 | 3 | grünstichig schwarz |
| 290 | $(C_2H_5)_2N-$ | 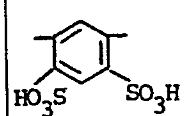 | 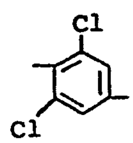 | 3 | schwarz |
| 291 | $CH_2-CH_2-N-$<br>\| \|<br>$SO_3H$ $CH_3$ | 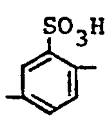 | 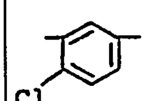 | 3 | schwarz |
| 292 | $CH_2-CH_2-NH-$<br>\|<br>COOH | dito | 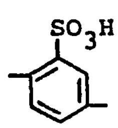 | 3 | schwarz |

Beispiel 293

Man verfährt zur Herstellung einer erfindungsgemäßen Disazoverbindung gemäß den Angaben des Beispieles 266, setzt jedoch anstellte der Anilin-4-β-sulfatoäthylsulfon-Verbindung 26,5 Teile Anilin-4-β-phosphatoäthylsulfon ein. Man erhält das Alkalimetallsalz der Verbindung der Formel

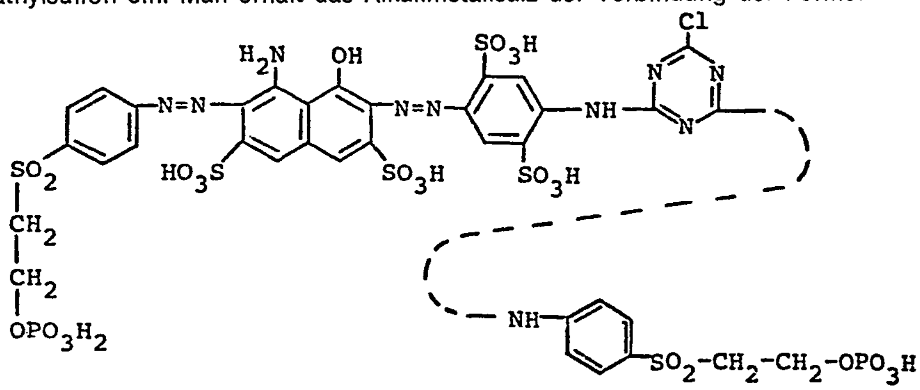

das ähnlich gute Farbstoffeigenschaften wie der Disazofarbstoff des Beispieles 266 besitzt.

**Ansprüche**

1. Wasserlösliche Disazoverbindungen der allgemeinen Formel (1)

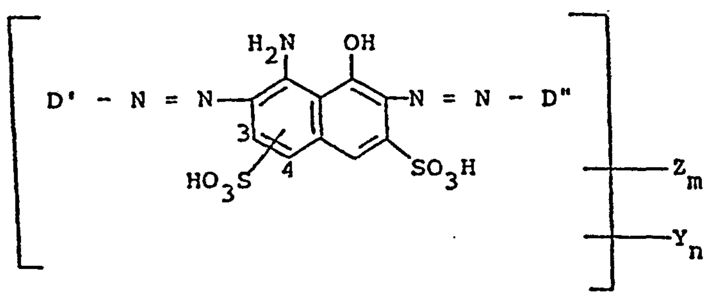

(1)

und ihre Salze, in welcher bedeuten :

D′ ist der Phenylrest oder der Naphthylrest, die durch eine Gruppe des nachstehend definierten Formelrestes Y oder Formelrestes Z substituiert sind und zusätzlich durch einen oder zwei Substituenten aus der Gruppe Sulfo, Chlor, Brom, niederes Alkyl und niederes Alkoxy substituiert sein können ;

D″ ist der Phenylrest oder der Naphthylrest, die durch eine Gruppe des nachstehend definierten Formelrestes Y oder Formelrestes Z substituiert sind und zusätzlich durch einen oder zwei Substituenten aus der Gruppe Sulfo, Chlor, Brom, niederes Alkyl und niederes Alkoxy substituiert sein können ;

D′ und D″ können zueinander gleiche oder voneinander verschiedene Bedeutungen besitzen ;

die eine Sulfogruppe im Disulfo-1-amino-8-hydroxynaphthylen-Rest steht in 3- oder 4-Stellung dieses Naphthalinrestes ;

Z ist eine Gruppe der Formel (2a), (2b), (2c), (2d), (2e) oder (2f)

$$-SO_2-CH_2-CH_2-X \quad (2a)$$

$$-\underset{\substack{|\\R}}{N}-SO_2-CH_2-CH_2-X. \quad (2b)$$

$$-CH_2-SO_2-CH_2-CH_2-X \quad (2c)$$

$$-SO_2-CH=CH_2 \quad (2d)$$

$$-\underset{\substack{|\\R}}{N}-SO_2-CH=CH_2 \quad (2e)$$

$$-CH_2-SO_2-CH=CH_2 \quad (2f)$$

in welchen

R eine Alkylgruppe von 1 bis 4 C-Atomen darstellt und

X ein Chloratom, die Acetyloxy-, die Thiosulfato-, die Phosphato- oder die Sulfatogruppe bedeutet;

Y ist ein Rest der Formel (3)

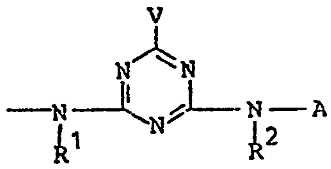

(3)

in welcher bedeuten:

$R^1$ ist ein Wasserstoffatom oder eine Alkylgruppe von 1 bis 4 C-Atomen;

$R^2$ ist ein Wasserstoffatom oder eine Alkylgruppe von 1 bis 4 C-Atomen, wobei $R^1$ und $R^2$ zueinander gleiche oder voneinander verschiedene Bedeutungen besitzen können;

V ist das Chlor- oder Bromatom;

A ist ein Wasserstoffatom oder eine Alkylgruppe von 1 bis 6 C-Atomen, die substituiert sein kann, oder ist der Phenylrest, der durch Substituenten aus der Gruppe Methyl, Äthyl, Methoxy, Äthoxy, Chlor, Brom, Carboxy, Sulfo, Carbamoyl und Sulfamoyl substituiert sein kann, oder ist ein Rest der Formel (4)

$$—B—Z'' \quad (4)$$

in welcher bedeuten:

B ist der Phenylen- oder Naphthylenrest, die durch ein oder zwei Substituenten substituiert sein können, die aus der Menge, bestehend aus einer Sulfogruppe, einem Chloratom, einem oder zwei Methyl- oder Äthylgruppen und einer oder zwei Methoxy- oder Äthoxygruppen, ausgewählt sind,

Z'' besitzt die für vorstehend genannte Bedeutung,

m ist die Zahl Null oder 1 und

n ist die Zahl 1 oder 2, wobei

die Summe von (m + n) gleich 2 ist

und in der Verbindung der Formel (1) zwingend mindestens zwei Reste enthalten sind, die aus den Resten der oben definierten Formeln (2a) bis (2f) und der nachstehenden Formel (5)

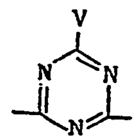

(5)

mit V der obengenannten Bedeutung ausgewählt sind.

2. Verbindung nach Anspruch 1 der allgemeinen Formel

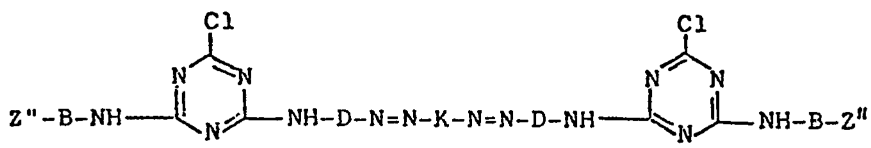

in welcher Z'' die in Anspruch 1 genannte Bedeutung besitzt, B der Phenylenrest ist, der durch eine Sulfogruppe oder durch eine Methylgruppe oder Methoxygruppe oder ein Chloratom oder zwei Methoxygruppen oder eine Methoxy- und eine Methylgruppe substituiert sein kann, wobei die beiden Formelreste B gleich oder verschieden voneinander sein können; D ist der Phenylenrest, der durch eine oder zwei Sulfogruppen oder eine Methoxygruppe, eine Methylgruppe oder ein Chloratom oder durch zwei Methoxygruppen oder durch eine Methoxy- und eine Methylgruppe substituiert sein kann, wobei die beiden Formelreste D gleich oder verschieden voneinander sein können, und K den bivalenten Rest der als Kupplungskomponente dienenden, doppel-ankuppelbaren 1-Amino-8-naphthol-3,6- oder -4,6-disulfonsäure steht, oder ein Salz davon.

3. Verbindung nach Anspruch 1 der allgemeinen Formel

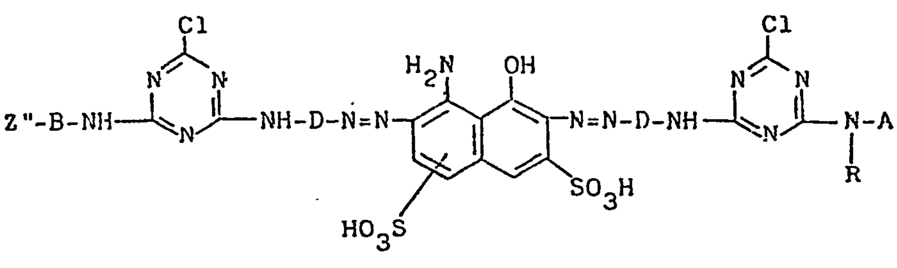

in welcher Z", B und D die in Anspruch 2 genannten Bedeutungen haben und R ein Wasserstoffatom oder eine Methyl- oder Äthylgruppe ist, sowie A eine Methyl- oder Äthylgruppe, eine β-Hydroxyäthyl-, β-Sulfoäthyl-, Carboxyäthyl-, β-Sulfatoäthyl- oder Sulfophenyl-Gruppe bedeutet, oder ein Salz davon.

4. Verbindung nach Anspruch 1 der allgemeinen Formel

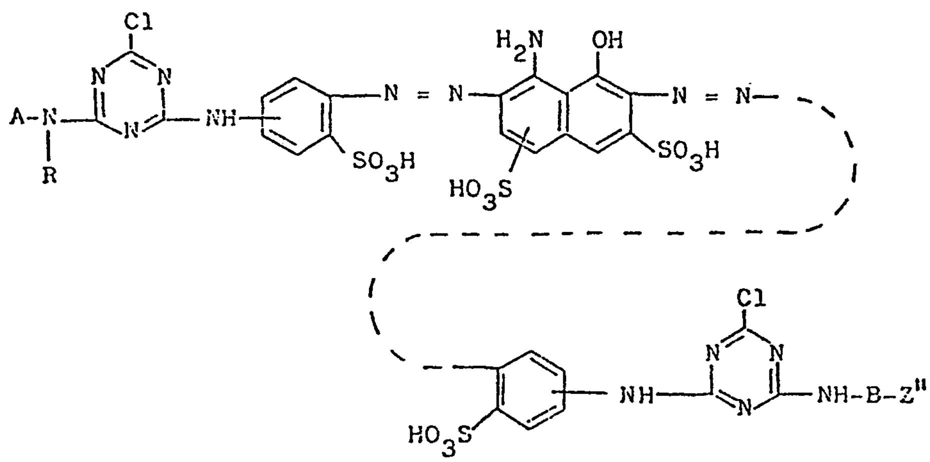

in welcher A, B, R und Z" die in Anspruch 3 genannten Bedeutungen besitzen und worin die beiden freistehenden Aminobrücken in meta- oder para-Stellung zu den Azogruppen gebunden sind, oder ein Salz davon.

5. Verbindung nach Anspruch 1 der allgemeinen Formel

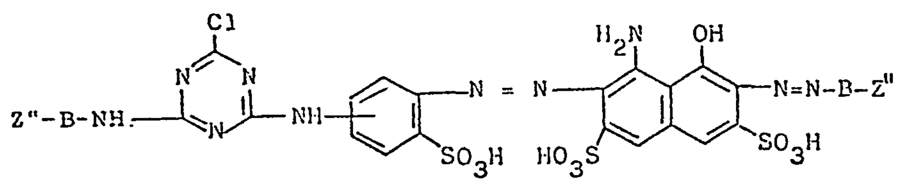

in welcher B und Z" die in Anspruch 2 genannten Bedeutungen besitzen, oder ein Salz davon.

6. Verbindung nach Anspruch 1 der allgemeinen Formel

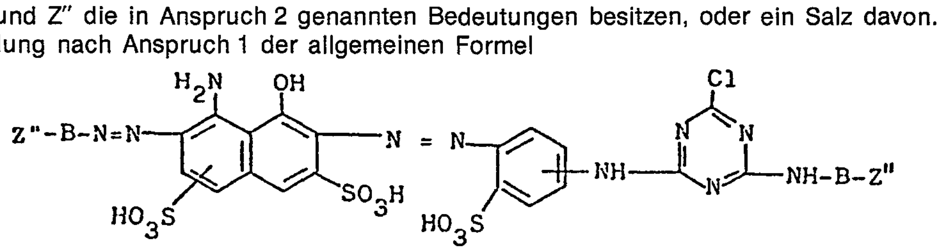

in welcher B und Z" die in Anspruch 2 genannten Bedeutungen besitzen, oder ein Salz davon.

7. Verbindung nach Anspruch 1 der allgemeinen Formel

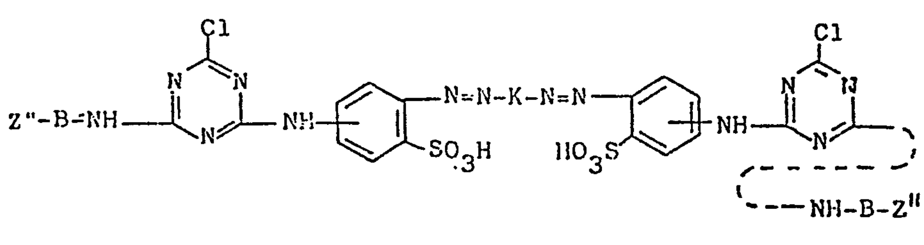

in welcher B, Z" und K die in Anspruch 2 genannten Bedeutungen besitzen, oder ein Salz davon.

8. Verbindung nach einem der Ansprüche 1 bis 7, in welcher Z" bzw. Z für die β-Sulfatoäthylsulfonyl- oder die Vinylsulfonyl-Gruppe steht.

9. Verfahren zur Herstellung einer der in Anspruch 1 definierten Disazoverbindung der allgemeinen Formel (1), dadurch gekennzeichnet, daß man in äquimolaren Mengen 1-Amino-8-naphthol-3,6-disulfonsäure oder 1-Amino-8-naphthol-4,6-disulfonsäure mit einer Diazoniumverbindung eines Amins der allgemeinen Formel (6)

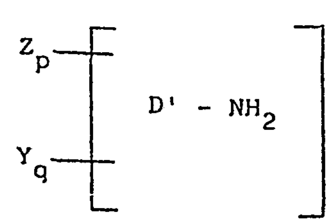

(6)

in welcher D', Z und Y die in Anspruch 1 genannten Bedeutungen haben und p und q jedes für die Zahl Null oder 1 steht, und nachfolgend die gebildete Monoazoverbindung mit einer Diazoniumverbindung eines Amins der allgemeinen Formel (7)

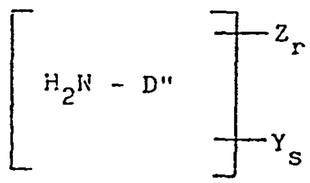 (7)

in welcher D'', Z und Y die in Anspruch 1 genannten Bedeutungen besitzen und r und s jedes für die Zahl Null oder 1 steht, umsetzt, wobei man die Amine der allgemeinen Formeln (6) und (7) so auswählt, daß die Summe von (p + q) gleich 1, die Summe von (r + s) gleich 1, die Summe von (p + r) gleich Null oder 1 und die Summe von (q + s) gleich 1 oder 2 ist und die Diazokomponenten der allgemeinen Formeln (6) und (7) gleich oder voneinander verschieden sein können.

10. Verwendung der Disazoverbindungen von Anspruch 1 als Farbstoffe.

## Claims

1. Water-soluble disazo compounds of the general formula (1)

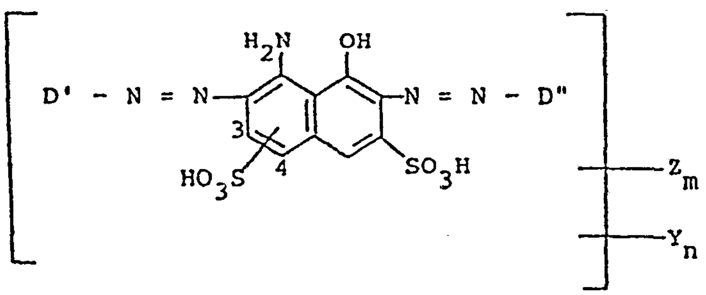 (1)

or their salts, the formula (1) being defined as follows :

D' is the phenyl radical or naphthyl radical, which are substituted by a group of the formula moiety Y or the formula moiety Z, defined below, and can be additionally substituted by one or two substituents from the group comprising sulfo, chlorine, bromine, lower alkyl and lower alkoxy ;

D'' is the phenyl radical or naphthyl radical, which are substituted by a group of the formula moiety Y or the formula moiety Z, defined below, and can be additionally substituted by one or two substituents from the group comprising sulfo ; chlorine, bromine, lower alkyl and lower alkoxy ;

D' and D'' can have meanings which are identical with one another or different from one another ;

the one sulfo group in the disulfo-1-amino-8-hydroxy-naphthylene radical is in the 3- or 4-position of this naphthalene radical ;

Z is a group of the formula (2a), (2b), (2c), (2d), (2e) or (2f)

$$-SO_2-CH_2-CH_2-X \quad (2a)$$

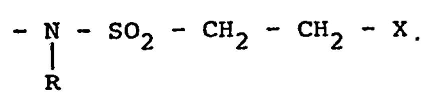 (2b)

$$-CH_2-SO_2-CH_2-CH_2-X \quad (2c)$$

$$-SO_2-CH=CH_2 \quad (2d)$$

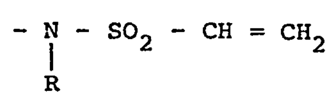 (2e)

$$-CH_2-SO_2-CH=CH_2 \quad (2f)$$

in which R is an alkyl group having 1 to 4 C-atoms, and X is a chlorine atom, the acetoxy group, the thiosulfato group, the phosphato group or the sulfato group ;

Y is a radical of the formula (3)

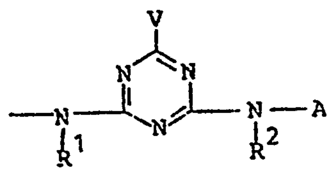

(3)

in which

$R^1$ is a hydrogen atom or an alkyl group having 1 to 4 C-atoms,

$R^2$ is a hydrogen atom or an alkyl group having 1 to 4 C-atoms, and

$R^1$ and $R^2$ can have meanings which are identical to one another or different from one another,

V is the chlorine or bromine atom,

A is a hydrogen atom or an alkyl group having 1 to 6 C-atoms which can be substituted, or is the phenyl radical which can be substituted by substituents from the group comprising methyl, ethyl, methoxy, ethoxy, chlorine, bromine, carboxy, sulfo, carbamoyl and sulfamoyl, or is a radical of the formula (4)

$$—B—Z'' \qquad (4)$$

in which

B is the phenylene or naphthylene radical, which can be substituted by one or two substituents chosen from the set comprising one sulfo group one chlorine atom, one or two methyl or ethyl groups and one or two methoxy or ethoxy groups,

Z" has the meaning mentioned above for Z ;

m is the number zero or 1 and

n is the number 1 or 2, and

the sum (m + n) is equal to 2,

and the compound of the formula (1) must necessarily contain at least two of the radicals selected from the radicals of the formulae (2a) to (2f), defined above, and the following formula (5)

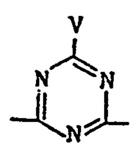

(5)

wherein V has the abovementioned meaning.

2. A compound according to claim 1 of the general formula

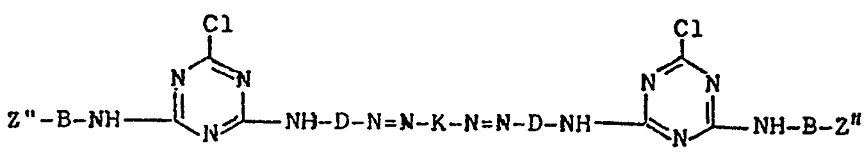

in which

Z" has the meaning given in claim 1,

B is the phenylene radical which can be substituted by one sulfo group or by one methyl group or methoxy group or one chlorine atom or two methoxy groups or by one methoxy and one methyl group, it being possible for the two formula moieties B to be identical with or different from one another,

D is the phenylene radical which can be substituted by one or two sulfo groups or one methoxy group, one methyl group or one chlorine atom or by two methoxy groups or by one methoxy and one methyl group, it being possible for the two formula moieties D to be identical with or different from one another, and

K is the bivalent radical of 1-amino-8-naphthol-3,6-disulfonic acid or 1-amino-8-naphthol-4,6-disulfonic acid, which serves as the couling component and can be coupled twofold ;

or a salt thereof.

3. A compound according to claim 1 of the general formula

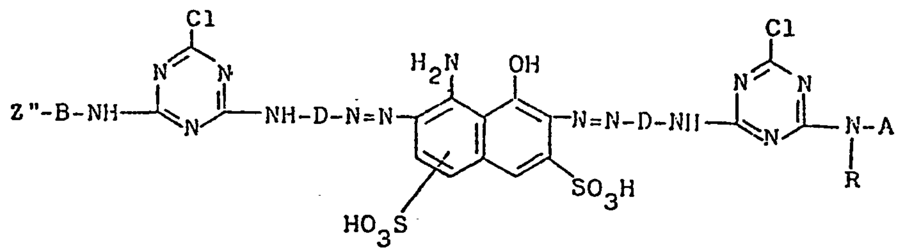

in which

Z", B and D have the meanings given in claim 2 and
R is a hydrogen atom or a methyl or ethyl group and
A is a methyl or ethyl group, a β-hydroxyethyl group, β-sulfatoethyl group, carboxyethyl group, β-sulfatoethyl group or sulfophenyl group ;
or a salt thereof.

4. A compound according to claim 1 of the general formula

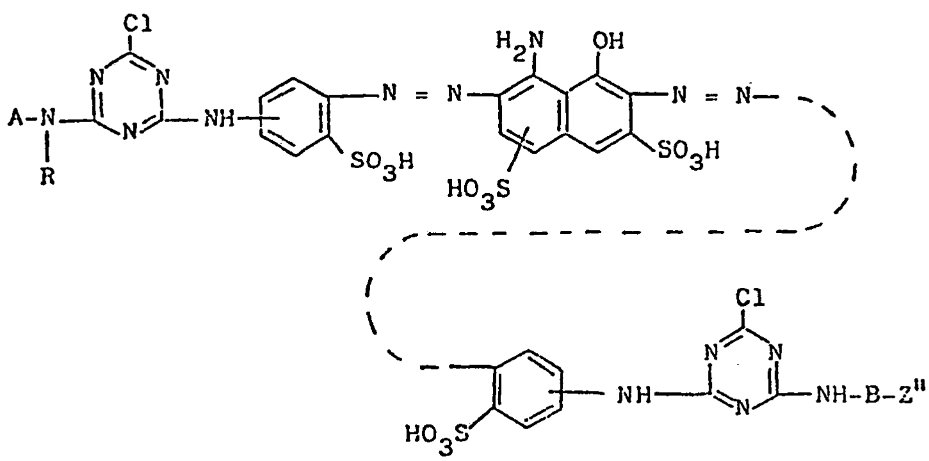

in which A, B, R and Z" have the meanings given in claim 3 and the two free amino bridges are bonded in the metaposition or para-position relative to the azo groups ; or a salt thereof.

5. A compound according to claim 1 of the general formula

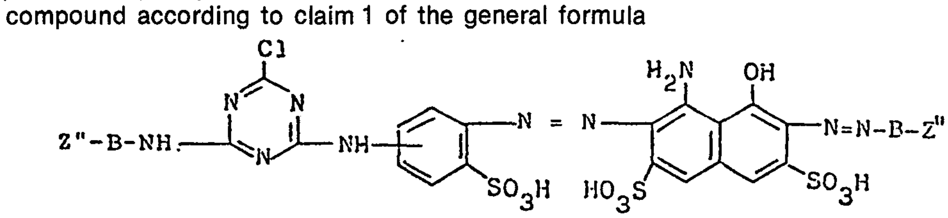

in which B and Z" have the meanings given in claim 2 ; or a salt thereof.

6. A compound according to claim 1 of the general formula

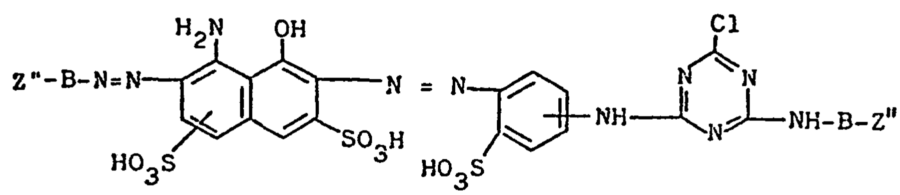

in which B and Z" have the meanings given in claim 2 ; or a salt thereof.

7. A compound as claimed in claim 1 of the general formula

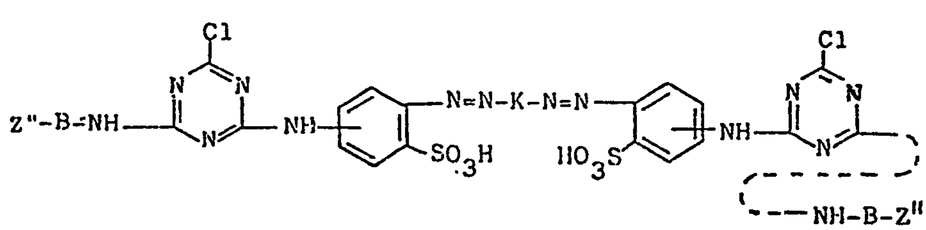

in which B, Z″ and K have the meanings given in claim 2 ; or a salt thereof.

8. A compound according to any of claims 1 to 7, in which Z or Z″, respectively, is the β-sulfatoethylsulfonyl group or the vinylsulfonyl group.

9. A process for the preparation of a disazo compound of the general formula (1), defined in claim 1, characterized in that 1-amino-8-naphthol-3,6-disulfonic acid or 1-amino-8-naphthol-4,6-disulfonic acid is reacted, in equimolar amounts, with a diazonium compound of an amine of the general formula (6)

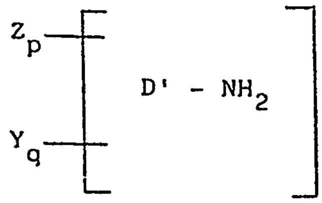

(6)

in which D′, Z and Y have the meanings given in claim 1 and p and q each represent the number zero or 1, and that, subsequently, the monoazo compound formed is reacted with a diazonium compound of an amine of the general formula (7)

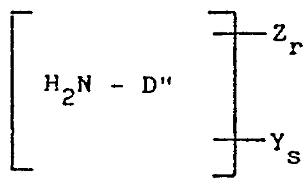

(7)

in which D″, Z and Y have the meanings given in claim 1 and r and s each represent the number zero or 1, the amines of the general formulae (6) and (7) being chosen so that the sum of (p + q) is equal to 1, the sum of (r + s) is equal to 1, the sum of (p + r) is equal to zero or 1, and the sum of (q + s) is equal to 1 or 2, and the diazo components of the general formulae (6) and (7) can be identical with or different from one another.

10. Use of the disazo compounds according to claim 1, as dyestuffs.

**Revendications**

1. Composés disazoïques hydrosolubles de formule générale (1) et leurs sels

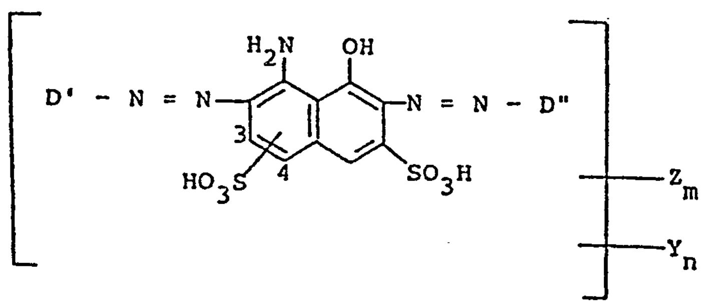

(1)

formule dans laquelle

D′ représente un radical phényle ou un radical naphtyle qui portent un radical Y ou un radical Z tels que définis ci-dessous et qui peuvent en outre porter 1 ou 2 substituants pris dans l'ensemble constitué par le radical sulfo, le chlore, le brome, les alkyles inférieurs et les alcoxy inférieurs,

D″ représente un radical phényle ou un radical naphtyle qui portent un radical Y ou un radical Z tels que définis ci-dessous et qui peuvent en outre porter 1 ou 2 substituants pris dans l'ensemble constitué par le radical sulfo, le chlore, le brome, les alkyles inférieurs et les alcoxy inférieurs,

D′ et D″ peuvent être identiques l'un à l'autre ou différents l'un de l'autre, l'un des radicaux sulfo portés par le radical disulfo amino-1 hydroxy-8 naphtylène occupe la position 3 ou la position 4 de ce radical naphtalénique,

Z représente un radical répondant à l'une des formules (2a), (2b), (2c), (2d), (2e) et (2f) :

(Siehe Tabelle Seite 41 f.)

$$-SO_2-CH_2-CH_2-X \qquad (2a)$$

$$-\underset{R}{\underset{|}{N}}-SO_2-CH_2-CH_2-X. \qquad (2b)$$

$$-CH_2-SO_2-CH_2-CH_2-X \qquad (2c)$$

$$-SO_2-CH=CH_2 \qquad (2d)$$

$$-\underset{R}{\underset{|}{N}}-SO_2-CH=CH_2 \qquad (2e)$$

$$-CH_2-SO_2-CH=CH_2 \qquad (2f)$$

dans lesquelles

R représente un alkyle en $C_1$-$C_4$, et

X représente un atome de chlore, ou un radical acétyloxy, thiosulfato, phosphato ou sulfato,

Y représente un radical répondant à la formule (3)

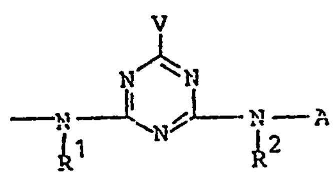

(3)

dans laquelle

$R^1$ représente un atome d'hydrogène ou un alkyle contenant de 1 à 4 atomes de carbone,

$R^2$ représente un atome d'hydrogène ou un alkyle contenant de 1 à 4 atomes de carbone,

$R^1$ et $R^2$ peuvent être identiques l'un à l'autre ou différents l'un de l'autre,

V représente un atome de chlore ou de brome,

A représente un atome d'hydrogène, un radical alkyle en $C_1$-$C_6$ éventuellement substitué, un radical phényle éventuellement porteur de substituants pris dans l'ensemble constitué par les radicaux méthyle, éthyle, méthoxy, éthoxy, chloro, bromo, carboxy, sulfo, carbamoyle et sulfamoyle, ou représente un radical répondant à la formule (4)

$$—B—Z'' \qquad (4)$$

dans laquelle

B représente un radical phénylène ou un radical naphtylène qui peuvent porter un ou deux substituants pris dans l'ensemble constitué par un radical sulfo, un atome de chlore, un ou deux radicaux méthyles ou éthyles et un ou deux radicaux méthoxy ou éthoxy, et

Z'' a la signification qui a été indiquée ci-dessus pour Z,

m désigne le nombre 0 ou le nombre 1, et

n désigne le nombre 1 ou le nombre 2,

la somme (m + n) étant égale à 2,

et dans laquelle il y a obligatoirement au moins deux radicaux choisis parmi les radicaux répondant aux formules (2a) à (2f) définies ci-dessus et à la formule (5) suivante

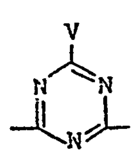

(5)

dans laquelle V a la signification précédemment donnée.

2. Composé selon la revendication 1, qui répond à la formule générale

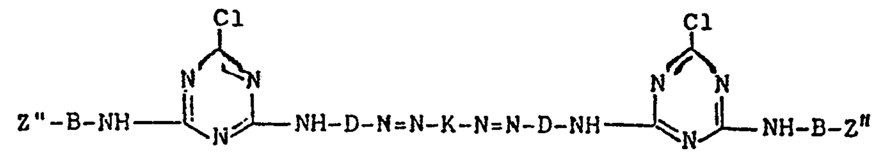

dans laquelle

Z" a la signification donnée à la revendication 1,

B représente un radical phénylène qui peut porter un radical sulfo ou un radical méthyle ou méthoxy ou un atome de chlore ou deux radicaux méthoxy ou un radical méthoxy et un radical méthyle, les deux radicaux B pouvant être identiques ou différents,

D représente un radical phénylène qui peut porter un ou deux radicaux sulfo ou un radical méthoxy, un radical méthyle ou un atome de chlore ou deux radicaux méthoxy ou un radical méthoxy et un radical méthyle, les deux radicaux D pouvant être identiques ou différents, et

K représente le radical bivalent du copulant bicopulable utilisé, c'est-à-dire de l'acide amino-1 hydroxy-8 naphtalène-disulfonique-3,6 ou -4,6,

ou un sel d'un tel composé.

3. Composé selon la revendication 1, qui répond à la formule générale

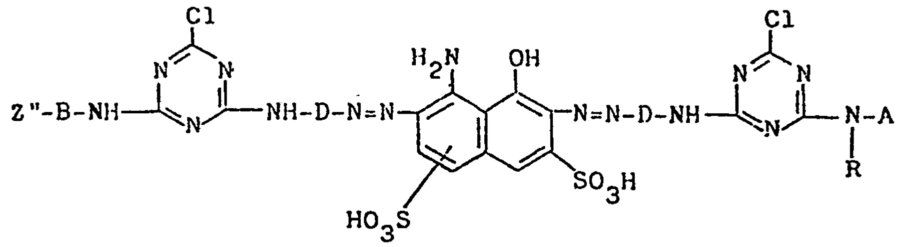

dans laquelle Z", B et D ont les significations données à la revendication 2, R représente un atome d'hydrogène ou un radical méthyle ou éthyle, et A représente un radical méthyle, éthyle, β-hydroxyéthyle, β-sulfoéthyle, carboxyéthyle, β-sulfatoéthyle ou sulfophényle,

ou un sel d'un tel composé.

4. Composé selon la revendication 1, qui répond à la formule générale

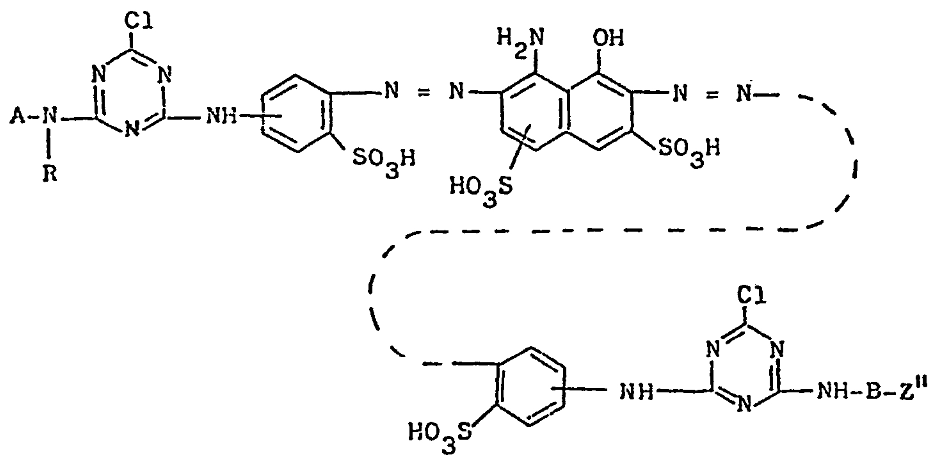

dans laquelle A, B, R et Z" ont les significations données à la revendication 3 et dans laquelle les deux ponts amino dont la position n'est pas précisée sur la formule se trouvent en position méta ou en position para relativement aux radicaux azo,

ou un sel d'un tel composé.

5. Composé selon la revendication 1, qui répond à la formule générale :

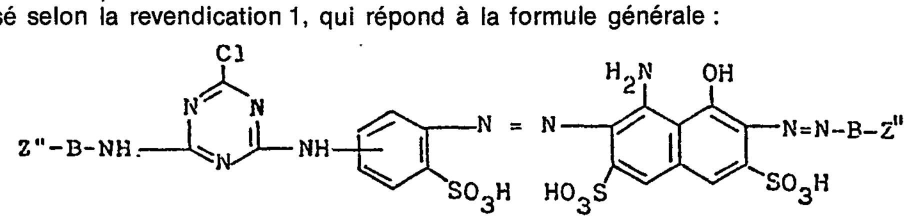

dans laquelle B et Z" ont les significations données à la revendication 2,

ou un sel d'un tel composé.

6. Composé selon la revendication 1, qui répond à la formule générale

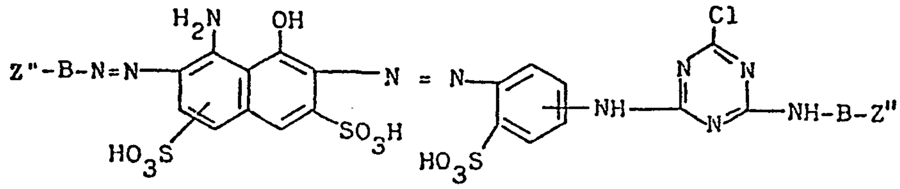

dans laquelle B et Z" ont les significations données à la revendication 2, ou un sel d'un tel composé.

7. Composé selon la revendication 1, qui répond à la formule générale

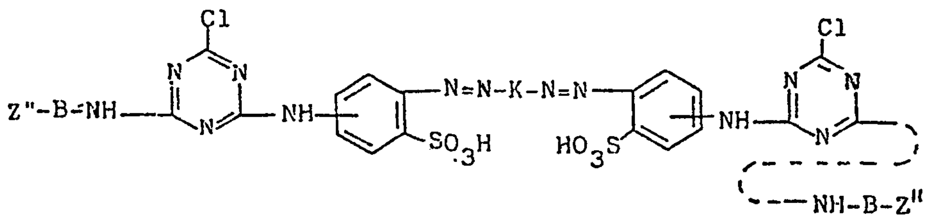

dans laquelle B, Z" et K ont les significations données à la revendication 2, ou un sel d'un tel composé.

8. Composé selon l'une quelconque des revendications 1 à 7, dans lequel Z" ou Z représente un radical β-sulfatoéthylsulfonyle ou vinylsulfonyle.

9. Procédé de préparation d'un composé disazoïque de formule générale (1) tel que défini à la revendication 1, procédé caractérisé en ce qu'on fait réagir, en des quantités équimolaires, l'acide amino-1 hydroxy-8 naphtalène-disulfonique-3,6 ou l'acide amino-1 hydroxy-8 naphtalène-disulfonique-3,6 ou l'acide amino-1 hydroxy-8 naphtalène-disulfonique-4,6 avec un composé de diazonium d'une amine répondant à la formule générale (6)

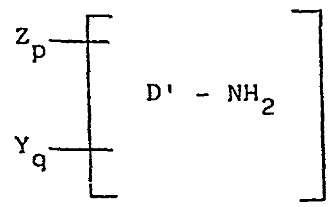

(6)

dans laquelle D', Z et Y ont les significations données à la revendication 1 tandis que p et q représentent chacun le nombre 0 ou le nombre 1, puis le composé mono-azoïque formé avec un composé de diazonium d'une amine répondant à la formule générale (7)

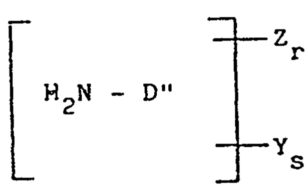

(7)

dans laquelle D", Z et Y ont les significations données à la revendication 1 tandis que r et s représentent chacun le nombre 0 ou le nombre 1, les amines de formules générales (6) et (7) étant choisies de telle façon que la somme (p + q) soit égale à 1, la somme (r + s) soit égale à 1, la somme (p + r) soit égale à 0 ou à 1 et la somme (q + s) soit égale à 1 ou à 2, et les composantes de diazotation de formules générales (6) et (7) pouvant être identiques l'une à l'autre ou différentes l'une de l'autre.

10. Application des composés disazoïques selon la revendication 1 en tant que colorants.